# EUROPEAN PATENT APPLICATION

(11) **EP 4 756 509 A1**
(43) Date of publication of application: **10.06.2026**
(21) Application number: 24847811.7
(22) Date of filing: 13.06.2024
(51) Int. Cl.: G02B 6/44

(54) **OPTICAL MODULE**

(30) Priority: 28.07.2023 CN 202322021304 U; 28.07.2023 CN 202310946913; 28.07.2023 CN 202322024314 U; 28.07.2023 CN 202322024378 U; 28.07.2023 CN 202310945203; 28.07.2023 CN 202310943716; 25.03.2024 CN 202420586028 U
(71) Applicant: Hisense Broadband Multimedia Technologies Co., Ltd., Economic and Technical Development Zone Qingdao Shandong 266555 (CN)
(72) Inventor: LIU, Xuxia, Qingdao, Shandong 266555 (CN); MA, Xiaolei, Qingdao, Shandong 266555 (CN); LI, Xuejian, Qingdao, Shandong 266555 (CN); HE, Peng, Qingdao, Shandong 266555 (CN); YANG, Sigeng, Qingdao, Shandong 266555 (CN)
(74) Representative: Casalonga
(86) International application number: PCT/CN2024/099021
(87) International publication number: WO 2025/025848

(57) **Abstract**

An optical module includes: a circuit board provided with an optical chip; a lens assembly covered on the optical chip, where a first seal exists between the lens assembly and the circuit board and is located on an outer side wall of the lens assembly and a surface of the circuit board, one end of the lens assembly is provided with a wrapping cavity, the lens assembly is provided with a recessed optical port groove and a blocking assembly that is at least partially covered on the optical port groove to prevent coolant from seeping into the optical port groove, and the optical port groove has a reflective surface configured to reflect an optical signal; and an optical fiber holder fixedly connected to an optical fiber at one end and fixed in the wrapping cavity at the other end, where a first end face of the optical fiber holder is embedded in the wrapping cavity, and a second seal exists between the optical fiber holder and the wrapping cavity and is located between respective side faces of the optical fiber holder and outer side faces of three side walls of the wrapping cavity away from the circuit board, and around a side wall of the wrapping cavity close to the circuit board.

## Description

This application claims priority to Application No. 202322021304.3, filed with the China National Intellectual Property Administration on July 28, 2023; priority to Application No. 202310946913.1, filed with the China National Intellectual Property Administration on July 28, 2023; priority to Application No. 202420586028.7, filed with the China National Intellectual Property Administration on March 25, 2024; priority to Application No. 202322024314.2, filed with the China National Intellectual Property Administration on July 28, 2023; priority to Application No. 202322024378.2, filed with the China National Intellectual Property Administration on July 28, 2023; priority to Application No. 202310945203.7, filed with the China National Intellectual Property Administration on July 28, 2023; and priority to Application No. 202310943716.4, filed with the China National Intellectual Property Administration on July 28, 2023, which are incorporated herein by reference in their entirety.

### FIELD OF THE INVENTION

The present disclosure relates to the field of optical fiber communication technology, and in particular, to an optical module.

### BACKGROUND OF THE INVENTION

With the development of new services and application models such as cloud computing, mobile Internet, and video, advances in optical communication technology have become increasingly important. In optical communication technology, the optical module is a tool for conversion between optical and electrical signals, and it is one of the key devices in optical communication equipment. Furthermore, as the demand for the development of optical communication technology increases, the transmission rate of optical modules continues to rise.

Although the power consumption per unit bandwidth decreases as communication rates increase, the overall power consumption of optical modules continues to rise. Most client devices rely on air cooling for heat dissipation, and for high-speed transmission systems, their cooling capacity has already reached its limit. To overcome the limitations of air cooling, people have begun to research various liquid cooling methods. One such method involves immersing switches in coolants such as Fluorinert (FC-40).

### SUMMARY OF THE INVENTION

An optical module provided in the present disclosure includes:
a circuit board, wherein an optical chip is disposed on the circuit board;
a lens assembly that is covered on the optical chip, wherein a first seal exists between the lens assembly and the circuit board, the first seal being located on an outer side wall of the lens assembly and a surface of the circuit board; one end of the lens assembly is disposed with a wrapping cavity; the lens assembly is further disposed thereon with a recessed optical port groove and a blocking assembly, at least part of the blocking assembly covering on the optical port groove to prevent coolant from penetrating into the optical port groove, and the optical port groove having a reflective surface configured to reflect an optical signal;
an optical fiber holder, wherein one end of the optical fiber holder fixedly connects an optical fiber, the other end of the optical fiber holder is fixed within the wrapping cavity, and a first end face of the optical fiber holder is embedded within the wrapping cavity; a second seal exists between the optical fiber holder and the wrapping cavity, the second seal being located between respective side faces of the optical fiber holder and outer side faces of three side walls of the wrapping cavity away from the circuit board, and around one side wall of the wrapping cavity close to the circuit board,
the optical module carries an optical cable, wherein the optical cable is provided, at a part of the optical cable that is connected with the optical module, with an optical cable fixation member, and is provided, at a middle part of the optical cable, with an isolation member; the optical cable has an optical cable body, the optical cable body comprising a cable sheath and an optical fiber placed in the cable sheath;
wherein the cable fixation member comprises an engaging part, the engaging part being provided therein with a first cavity, and a first end of the engaging part engaging at an optical port of the optical module; the optical fiber and a seventh seal filling a gap between the engaging part and the optical fiber are arranged in the first cavity;
the isolation member comprises an isolation sleeve, the isolation sleeve being provided therein with a second cavity, in which the cable sheath having a broken surface, the optical fiber that is not broke and a tenth seal wrapping the broken surface of the broken cable sheath and an outer wall of the unbroken optical fiber are arranged.

### BRIEF DESCRIPTION OF THE DRAWINGS

To more clearly illustrate the technical solution in the embodiments of the present disclosure, the accompanying drawings that need to be used in the description of the embodiments or the prior art will be briefly introduced below. Apparently, the accompanying drawings in the description below merely illustrate some embodiments of the present disclosure. Those of ordinary skill in the art may also derive other accompanying drawings from these accompanying drawings without creative efforts.
FIG. 1 is a partial architecture diagram of an optical communication system according to an embodiment of the present disclosure;
FIG. 2 is a partial structural diagram of a host computer according to an embodiment of the present disclosure;
FIG. 3 is a structural diagram of an optical module according to an embodiment of the present disclosure;
FIG. 4 is an exploded view of an optical module according to an embodiment of the present disclosure;
FIG. 5 is a cross-sectional view of an optical transceiver component and a circuit board according to an embodiment of the present disclosure;
FIG. 6 is an exploded view of an optical transceiver component and a circuit board according to some embodiments of the present disclosure;
FIG. 7 is a structural diagram of a first optical transceiver component according to an embodiment of the present disclosure;
FIG. 8 is an exploded view of a first optical transceiver component according to an embodiment of the present disclosure;
FIG. 9 is a cross-sectional view of a first optical transceiver component according to an embodiment of the present disclosure;
FIG. 10 is an assembly diagram of a first lens assembly and a blocking sheet according to an embodiment of the present disclosure;
FIG. 11 is an exploded view of a first lens assembly and a blocking sheet according to an embodiment of the present disclosure;
FIG. 12 is a structural diagram of a first lens assembly according to an embodiment of the present disclosure, viewed from a first perspective;
FIG. 13 is a structural diagram of a first lens assembly according to an embodiment of the present disclosure, viewed from a second perspective;
FIG. 14 is a structural diagram of an optical fiber holder according to an embodiment of the present disclosure;
FIG. 15 is a first structural diagram of a first lens assembly according to an embodiment of the present disclosure, viewed from a third perspective;
FIG. 16 is a second structural diagram of a first lens assembly according to an embodiment of the present disclosure, viewed from a third perspective;
FIG. 17 is a third structural diagram of a first lens assembly according to an embodiment of the present disclosure, viewed from a third perspective;
FIG. 18 is a first optical path diagram of a first optical transceiver component according to an embodiment of the present disclosure;
FIG. 19 is a second optical path diagram of a second optical transceiver component according to an embodiment of the present disclosure;
FIG. 20 is a structural diagram of a second optical transceiver component according to an embodiment of the present disclosure;
FIG. 21 is an exploded view of a second optical transceiver component according to an embodiment of the present disclosure;
FIG. 22 is a cross-sectional view of a second optical transceiver component according to an embodiment of the present disclosure;
FIG. 23 is a structural diagram of a second lens assembly according to an embodiment of the present disclosure;
FIG. 24 is a structural diagram of a second lens assembly according to an embodiment of the present disclosure, viewed from another perspective;
FIG. 25 is a structural diagram of a sealing cover plate according to an embodiment of the present disclosure;
FIG. 26 is a structural diagram of a sealing cover plate according to an embodiment of the present disclosure, viewed from another perspective;
FIG. 27 is a structural diagram of a third optical transceiver component according to an embodiment of the present disclosure;
FIG. 28 is an exploded view of a third optical transceiver component according to an embodiment of the present disclosure;
FIG. 29 is a cross-sectional view of a third optical transceiver component according to an embodiment of the present disclosure;
FIG. 30 is a structural diagram of a sealing dam according to an embodiment of the present disclosure;
FIG. 31 is a structural diagram of a sealing dam according to an embodiment of the present disclosure, viewed from another perspective;
FIG. 32 is an assembly diagram of an optical module with an optical cable according to an embodiment of the present disclosure;
FIG. 33 is an exploded view of an optical module with an optical cable according to an embodiment of the present disclosure;
FIG. 34 is an exploded view of an optical cable according to an embodiment of the present disclosure;
FIG. 35 is an exploded view of an optical cable fixation member and an optical cable body according to an embodiment of the present disclosure;
FIG. 36 is an exploded view of an optical cable fixation member according to an embodiment of the present disclosure;
FIG. 37 is a cross-sectional view of a first crimping ring, a second crimping ring, and an engaging part according to an embodiment of the present disclosure;
FIG. 38 is a cross-sectional view of an optical cable body and an optical cable fixation member according to an embodiment of the present disclosure;
FIG. 39 is an exploded view of another optical cable fixation member according to an embodiment of the present disclosure;
FIG. 40 is a cross-sectional view of a first crimping ring, another engaging part, and an optical cable body according to an embodiment of the present disclosure;
FIG. 41 is a cross-sectional view of an optical cable and another optical cable fixation member according to an embodiment of the present disclosure;
FIG. 42 is an exploded view of an optical cable body and an isolation member according to an embodiment of the present disclosure;
FIG. 43 is a cross-sectional view of an optical cable body and an isolation member according to an embodiment of the present disclosure;
FIG. 44 is an exploded view of an isolation member according to an embodiment of the present disclosure;
FIG. 45 is a cross-sectional view of an isolation member according to an embodiment of the present disclosure;
FIG. 46 is a cross-sectional view of a first protective tube and a protective tail tube according to an embodiment of the present disclosure;
FIG. 47 is a structural diagram of another isolation member according to an embodiment of the present disclosure;
FIG. 48 is an exploded view of another isolation member according to an embodiment of the present disclosure;
FIG. 49 is a cross-sectional view of another isolation member and an optical cable body according to an embodiment of the present disclosure;
FIG. 50 is a cross-sectional view of another isolation member according to an embodiment of the present disclosure;
FIG. 51 is a cross-sectional view of a first protective tube and a second protective tube according to an embodiment of the present disclosure; and
FIG. 52 is a cross-sectional view of a second protective tube according to an embodiment of the present disclosure.

### DETAILED DESCRIPTION OF THE EMBODIMENTS

The technical solutions in some embodiments of the present disclosure will be clearly and completely described below with reference to the accompanying drawings. Apparently, the described embodiments are merely some rather than all of the embodiments of the present disclosure. All other embodiments obtained by those of ordinary skill in the art based on the embodiments provided in the present disclosure fall within the scope of protection of the present disclosure.

Unless the context requires otherwise, throughout the description and claims, the term "comprise" and other forms thereof, such as the third-person singular form "comprises" and the present participle form "comprising" are construed in an open, inclusive meaning, that is, "comprising, but not limited to." In the description, the terms "one embodiment," "some embodiments," "exemplary embodiments," "example," "specific example," or "some examples," etc. are intended to indicate that a particular feature, structure, material, or characteristic related to the embodiment or example is included in at least one embodiment or example of the present disclosure. The schematic illustration of the above terms does not necessarily refer to the same embodiment or example. Furthermore, the specific features, structures, materials, or characteristics described may be included in any one or more embodiments or examples in any suitable manner.

Hereinafter, the terms "first" and "second" are for descriptive purposes only, and are not to be understood as indicating or implying relative importance or as implicitly indicating the number of technical features indicated. Thus, the use of terms like "first" and "second" to describe features can explicitly or implicitly encompass one or more of such features. In the description of embodiments of the present disclosure, unless otherwise specified, "a plurality" means two or more.

In describing some embodiments, the expressions "coupled" and "connected" and extensions thereof may be used. For example, in describing some embodiments, the term "connected" may be used to indicate that two or more components are in direct physical contact or electrical contact with each other. For another example, in describing some embodiments, the term "coupled" may be used to indicate that two or more components are in direct physical contact or electrical contact with each other. However, the term "coupled" or "communicatively coupled" may also indicate that two or more components are not in direct contact with each other, but still cooperate or interact with each other. The embodiments disclosed herein are not necessarily limited to the contents herein.

"At least one of A, B, and C" has the same meaning as "at least one of A, B, or C", encompassing the following combinations of A, B, and C: only A, only B, only C, a combination of A and B, a combination of A and C, a combination of B and C, as well as a combination of A, B, and C.

"A and/or B" includes three combinations of only A, only B, and a combination of A and B.

The use of "suitable for" or "configured to" herein means open and inclusive language that does not exclude devices suitable for or configured to perform additional tasks or steps.

As used herein, "about," "approximately," or "approximately" includes a stated value as well as an average within an acceptable range of deviation from a particular value, where the acceptable range of deviation is determined by one of ordinary skill in the art taking into account the measurement in question and the error associated with the measurement of a particular amount (i.e., limitations of the measurement system).

In optical communication technology, in order to establish information transmission between information processing devices, it is necessary to load information onto light and use the propagation of light to achieve the transmission of information. Here, the light loaded with information is an optical signal. When the optical signal is transmitted in the information transmission devices, the loss of optical power can be reduced, such that high-speed, long-distance, and low-cost information transmission can be achieved. The signals that the information processing devices are able to recognize and process are electrical signals. The information processing devices usually include optical network units (ONUs), gateways, routers, switches, mobile phones, computers, servers, tablet computers, televisions, etc. The information transmission devices usually include optical fibers and optical waveguides.

The optical modules enable the conversion between optical signals and electrical signals from the information processing devices and the information transmission devices. For example, at least one of an optical signal input or an optical signal output of an optical module is connected to an optical fiber, and at least one of an electrical signal input or an electrical signal output of the optical module is connected to an optical network unit; a first optical signal from the optical fiber is transmitted to the optical module, and the optical module converts the first optical signal into a first electrical signal and transmits the first electrical signal to the optical network unit; and a second electrical signal from the optical network unit is transmitted to the optical module, and the optical module converts the second electrical signal into a second optical signal and transmits the second optical signal to the optical fiber. Since information can be transmitted through electrical signals between a plurality of information processing devices, at least one information processing device in the plurality of information processing devices is required to be directly connected to the optical module, and all information processing devices are not required to be directly connected to the optical module. Here, the information processing device directly connected to the optical module is referred to as a host computer of the optical module. In addition, the optical signal input or the optical signal output of the optical module can be referred to as an optical port, and the electrical signal input or the electrical signal output of the optical module can be referred to as an electrical port.

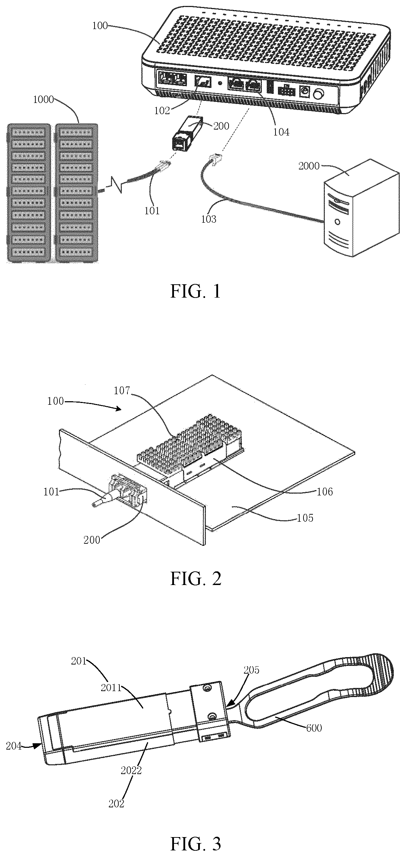

FIG. 1 is a partial structural diagram of an optical communication system according to an embodiment of the present disclosure. As shown in FIG. 1, the optical communication system primarily includes a remote information processing device 1000, a local information processing device 2000, a host computer 100, an optical module 200, an optical fiber 101 and a network cable 103.

One end of the optical fiber 101 extends in the direction of the remote information processing device 1000, and the other end of the optical fiber 101 is connected to the optical module 200 via an optical port of the optical module 200. An optical signal can undergo total reflection in the optical fiber 101, and the propagation of the optical signal in the total reflection direction can nearly maintain original optical power. The optical signal undergoes multiple total reflections in the optical fiber 101 to transmit an optical signal from the remote information processing device 1000 to the optical module 200 or to transmit an optical signal from the optical module 200 to the remote information processing device 1000, thereby achieving long-distance and low-power-loss information transmission.

The optical communication system may include one or more optical fibers 101, and the optical fiber 101 is detachably or fixedly connected to the optical module 200. The host computer 100 is configured to provide a data signal to the optical module 200, receive a data signal from the optical module 200, or monitor or control a working state of the optical module 200.

The host computer 100 includes a generally cuboid-shaped housing and an optical module interface 102 disposed on the housing. The optical module interface 102 is configured to be connected to the optical module 200, enabling the host computer 100 to establish a one-way or two-way electrical signal connection with the optical module 200.

The host computer 100 further includes an external electrical interface that can be connected to an electrical signal network. For example, the external electrical interface includes a universal serial bus (USB) interface or a network cable interface 104. The network cable interface 104 is configured to be connected to the network cable 103, enabling the host computer 100 to establish a one-way or two-way electrical signal connection with the network cable 103. One end of the network cable 103 is connected to the local information processing device 2000, and the other end of the network cable 103 is connected to the host computer 100, thereby establishing an electrical signal connection between the local information processing device 2000 and the host computer 100 via the network cable 103. For example, a third electrical signal sent by the local information processing device 2000 is transmitted to the host computer 100 via the network cable 103. The host computer 100 generates a second electrical signal according to the third electrical signal. The second electrical signal from the host computer 100 is transmitted to the optical module 200. The optical module 200 converts the second electrical signal into a second optical signal and transmits the second optical signal to the optical fiber 101. The second optical signal is transmitted through the optical fiber 101 to the remote server 1000. For example, a first optical signal from the remote information processing device 1000 is transmitted through the optical fiber 101. The first optical signal from the optical fiber 101 is transmitted to the optical module 200. The optical module 200 converts the first optical signal into a first electrical signal, and then the optical module 200 transmits the first electrical signal to the host computer 100. The host computer 100 generates a fourth electrical signal according to the first electrical signal and transmits the fourth electrical signal to the local information processing device 2000. It should be noted that the optical module is a tool to achieve the conversion between optical signals and electrical signals. In the conversion between the optical signals and the electrical signals, the information remains unchanged, and the encoding and decoding methods for the information may vary.

In addition to the optical network unit, the host computer 100 further includes an optical line terminal (OLT), an optical network terminal (ONT), or a data center server.

FIG. 2 is a partial structural diagram of a host computer according to an embodiment of the present disclosure. To clearly show the connection relationship between the optical module 200 and the host computer 100, FIG. 2 shows only the structure of the host computer 100 related to the optical module 200. As shown in FIG. 2, the host computer 100 further includes a printed circuit board (PCB) 105 disposed in the housing, a cage 106 disposed on a surface of the PCB 105, a heat sink 107 disposed on the cage 106, and an electrical connector disposed inside the cage 106. The electrical connector is configured to be connected to the electrical port of the optical module 200. The heat sink 107 has protruding structures such as fins that enlarge the heat dissipation area.

The optical module 200 is inserted into the cage 106 of the host computer 100, and the optical module 200 is fixed by the cage 106. Heat generated by the optical module 200 is conducted to the cage 106 and then diffused through the heat sink 107. After the optical module 200 is inserted into the cage 106, the electrical port of the optical module 200 is connected to the electrical connector inside the cage 106, such that the optical module 200 establishes a two-way electrical signal connection with the host computer 100. In addition, the optical port of the optical module 200 is connected to the optical fiber 101, such that the optical module 200 establishes a two-way optical signal connection with the optical fiber 101.

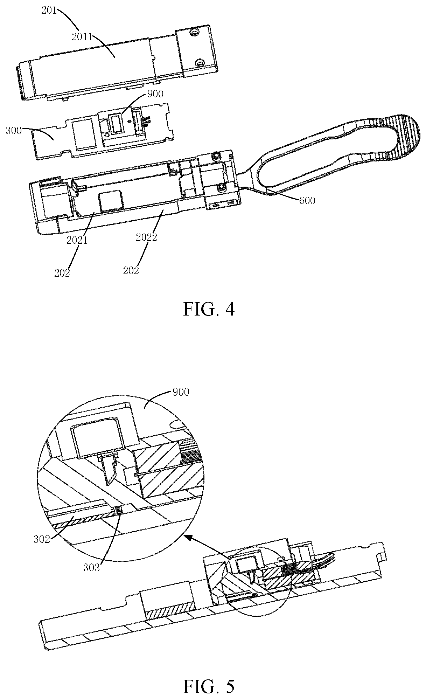

FIG. 3 is a structural diagram of an optical module according to an embodiment of the present disclosure. FIG. 4 is an exploded view of an optical module according to an embodiment of the present disclosure. As shown in FIG. 3 and FIG. 4, the optical module 200 includes a shell, and a circuit board 300 and an optical transceiver component 900 disposed in the shell.

The shell includes an upper shell 201 and a lower shell 202, where the upper shell 201 is covered on the lower shell 202 to form the shell with an opening 204 and an opening 205; and the outer contour of the shell is generally square.

In some embodiments, the lower shell 202 includes a bottom plate 2021 and two lower side plates 2022 located at two sides of the bottom plate 2021 and perpendicular to the bottom plate 2021; and the upper shell 201 includes a cover plate 2011, where the cover plate 2011 is covered on the two lower side plates 2022 of the lower shell 202 to form the shell.

In some embodiments, the lower shell 202 includes a bottom plate 2021 and two lower side plates 2022 located at two sides of the base plate 2021 and perpendicular to the bottom plate 2021; and the upper shell 201 includes a cover plate 2011 and two upper side plates located at two sides of the cover plate 2011 and perpendicular to the cover plate 2011, where the two upper side plates and the two lower side plates 2022 are combined to ensure that the upper shell 201 is covered on the lower shell 202.

The direction of a connecting line between the opening 204 and the opening 205 may be consistent with the length direction of the optical module 200 or may be inconsistent with the length direction of the optical module 200. For example, the opening 204 is located at the end of the optical module 200 (the right end of FIG. 3), and the opening 205 is also located at the end of the optical module 200 (the left end of FIG. 3). Alternatively, the opening 204 is located at the end of the optical module 200, and the opening 205 is located at the side of the optical module 200. The opening 204 is an electrical port, where a gold finger of the circuit board 300 extends out from the electrical port and is inserted into the electrical connector of the host computer 100. The opening 205 is an optical port, which is configured to be connected to the external optical fiber 101 such that the optical fiber 101 is connected to the optical transceiver component 900 in the optical module 200.

The assembly method of combining the upper shell 201 with the lower shell 202 is adopted, such that the circuit board 300, the optical transceiver component 900, and other components can be conveniently mounted in the shell, and these components can be packaged by the upper shell 201 and the lower shell 202 for protection. In addition, when the circuit board 300, the optical transceiver component 900, and other components are assembled, it is convenient for the deployment of positioning parts, heat dissipation parts, and electromagnetic shielding parts of these components, and is conducive to the automatic production.

In some embodiments, the upper shell 201 and the lower shell 202 are made of metal materials, which is conducive to electromagnetic shielding and heat dissipation.

In some embodiments, the optical module 200 further includes an unlocking component 600 located outside its shell. The unlocking component 600 is configured to achieve a fixed connection between the optical module 200 and the host computer, or to release the fixed connection between the optical module 200 and the host computer.

For example, the unlocking component 600 is located outside the two lower side plates 2022 of the lower shell 202, and includes an engaging component that matches the cage 106 of the host computer 100. When the optical module 200 is inserted into the cage 106, the optical module 200 is fixed in the cage 106 by the engaging component of the unlocking component 600; and when the unlocking component 600 is pulled, the engaging component of the unlocking component 600 moves accordingly, such that the connection relationship between the engaging component and the host computer is changed to release the fixation of the optical module 200 to the host computer, thereby pulling out the optical module 200 from the cage 106.

The circuit board 300 includes circuit traces, electronic components, and chips, where the electronic components and the chips are connected according to the circuit design through the circuit traces to implement the functions such as power supply, electrical signal transmission and grounding. The electronic components may include, for example, capacitors, resistors, transistors, and metal-oxide-semiconductor field-effect transistors (MOSFETs). The chips may include, for example, microcontroller units (MCUs), laser driving chips, transimpedance amplifiers (TIAs), limiting amplifiers, clock and data recovery (CDR) chips, power management chips, and digital signal processing (DSP) chips.

The circuit board 300 is generally a rigid circuit board. The rigid circuit board can also achieve the bearing effect because of its relatively hard material, for example, the rigid circuit board can smoothly carry the above-mentioned electronic components and chips. The rigid circuit board can also be inserted into the electrical connector in the cage 106 of the host computer 100.

The circuit board 300 further includes a gold finger formed on its end surface, where the gold finger consists of a plurality of pins that are independent of each other. The circuit board 300 is inserted into the cage 106 and is connected to the electrical connector in the cage 106 via the gold finger. The gold finger may be disposed only on a side surface of the circuit board 300 (such as an upper surface shown in FIG. 4), or may be disposed on upper and lower side surfaces of the circuit board 300 to provide more pins, so as to adapt to occasions requiring a large number of pins. The gold finger is configured to establish an electrical connection with the host computer to achieve power supply, grounding, two-wire inter-integrated circuit (I2C) signal transmission, data signal transmission, etc. Certainly, flexible circuit boards are also used in some optical modules. Flexible circuit boards are generally used in conjunction with rigid circuit boards as a supplement to rigid circuit boards.

In some embodiments, an optical transceiver component 900 includes only one first optical transceiver component, one second optical transceiver component, or one third optical transceiver component, where the optical transceiver component 900 has both emission and reception functions to achieve at least one set of optical emission and at least one set of optical reception.

In some other embodiments, an optical transceiver component 900 includes two first optical transceiver components, two second optical transceiver components, or two third optical transceiver components disposed in a staggered manner, where the optical transceiver component 900 has both emission and reception functions to achieve two sets of optical emission and two sets of optical reception.

In some other embodiments, an optical transceiver component 900 includes one first optical transceiver component and one second optical transceiver component disposed in a staggered manner, includes one first optical transceiver component and one third optical transceiver component disposed in a staggered manner, or includes one second optical transceiver component and one third optical transceiver component disposed in a staggered manner, where the optical transceiver component 900 has both emission and reception functions to achieve two sets of optical emission and two sets of optical reception.

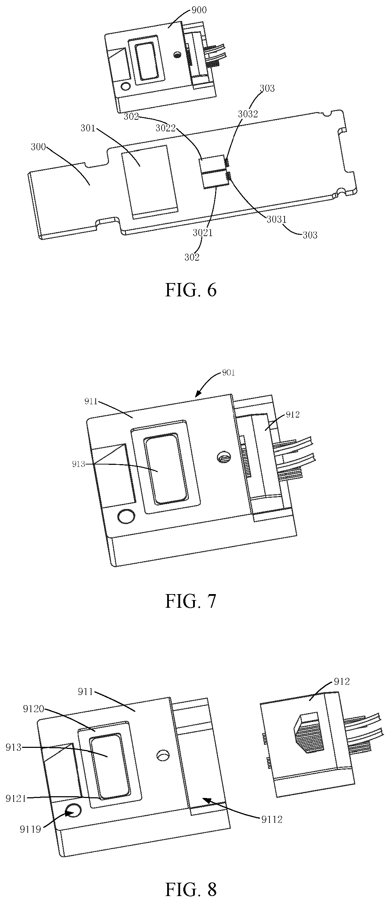

FIG. 5 is a cross-sectional view of an optical transceiver component and a circuit board according to an embodiment of the present disclosure. FIG. 6 is an exploded view of an optical transceiver component and a circuit board according to an embodiment of the present disclosure. As shown in FIG. 5 and FIG. 6, the circuit board 300 is provided with an optical matching chip 302 and an optical chip 303, where the optical matching chip 302 may be a bare chip such as a laser driving chip 3021 and/or a TIA chip 3022. The bare chip is bonded to the circuit board 300 via silver adhesive to achieve fixation and heat dissipation, and then the bare chip is in circuit connection with the circuit board 300 via gold wire bonding. The optical chip 303 may be an optical emission chip 3031 and/or an optical reception chip 3032, where the optical emission chip 3031 and the optical reception chip 3032 may be fixed to the circuit board 300 side by side.

In some embodiments, the optical transceiver component 900 includes an optical fiber holder and a lens assembly, where the optical fiber holder is optically connected to the lens assembly, and the lens assembly is covered on the optical matching chip 302 and the optical chip 303 on the circuit board 300, so as to place the optical matching chip 302 and the optical chip 303 in a covering cavity formed by the lens assembly and the circuit board.

The optical chip 303 is attached to the circuit board 300, and its light-emitting surface or light-incident surface is located at a top surface of the optical chip 303. In this way, a light beam emitted by the optical emission chip 3031 is perpendicular to the circuit board 300, and a light beam received by the optical reception chip 3032 is perpendicular to the circuit board 300. However, the optical fiber 101 connected to the optical module is parallel to the circuit board 300, and it is necessary to change a transmission direction of the light beam emitted by the optical emission chip 3031 and the external light beam transmitted to the optical reception chip 3032. Therefore, the lens assembly is used to change the light beam emitted by the optical emission chip 3031, such that the light beam emitted by the optical emission chip 3031 is reflected by the lens assembly to be parallel to the circuit board 300, which facilitates coupling of the reflected light beam into the optical fiber; and the received light beam transmitted by the external optical fiber is reflected by the lens assembly to be perpendicular to the circuit board 300, which facilitates reception by the optical reception chip 3032.

As shown in FIG. 6, the circuit board 300 is further provided with a DSP chip 301, where the DSP chip 301 is configured to process high-frequency signals. A high-frequency signal received at a reception end by the optical reception chip 3032 is amplified by the TIA chip 3022, transmitted to the DSP chip 301 for processing via a high-frequency signal line connecting the TIA chip 3022 and the DSP chip 301, and then delivered to the communication system via the gold finger. The process is exactly the opposite for an emission end. After being received at the gold finger, the signal is processed by the DSP chip 301. The processed signal is transmitted to the laser driving chip 3021 via a signal line connecting the DSP chip 301 and the laser driving chip 3021, and then transmitted to the optical emission chip 3031 to be converted into an optical signal. The optical signal emitted by the optical emission chip 3031 is coupled into the optical fiber for emission and transmission via the lens assembly of the optical transceiver component 900.

Although the power consumption per unit bandwidth decreases as communication rates increase, the overall power consumption of optical modules continues to rise. Most client devices rely on air cooling for heat dissipation, and for high-speed transmission systems, their cooling capacity has already reached its limit. To overcome the limitations of air cooling, people have begun to research various liquid cooling methods. One such method involves immersing switches in coolants such as Fluorinert (FC-40). However, due to the requirement for low costs, the optical modules deployed in data centers often adopt a non-sealed structural design for their optical emission components and optical reception components. Their key optical paths are all in an open state. When the optical modules enter the coolant along with the switches, these key optical paths and components also come into the coolant. This leads to changes in the optical mechanism and contamination of the optical surfaces, seriously affecting normal operation of the optical modules.

In some embodiments, in order to prevent the coolant from seeping into the optical chip 303 and the optical matching chip 302 inside the lens assembly via a gap between the lens assembly and the circuit board 300, the lens assembly is covered on the optical chip 303 and the optical matching chip 302, and then a first seal is disposed between the lens assembly and the circuit board 300. The first seal is located on the outer side wall of the lens assembly and the surface of the circuit board 300, that is, the sealing adhesive is applied around a contact part between the lens assembly and the circuit board 300, such that the sealing adhesive completely seals the gap between the lens assembly and the circuit board 300; and the sealing adhesive accumulates on the surface of the circuit board 300 and the outer side wall of the lens assembly, such that the first seal is formed after the sealing adhesive is cured. By way of example, the lens assembly may be a first lens assembly, where the first seal is disposed between the first lens assembly and the circuit board 300; the lens assembly may be a second lens assembly, where the first seal is disposed between the second lens assembly and the circuit board 300; and the lens assembly may be a third lens assembly, where the first seal is disposed between the third lens assembly and the circuit board 300. In some embodiments, the sealing adhesive is an epoxy-based adhesive which has excellent chemical corrosion resistance, heat resistance, and bonding performance, and can better prevent seepage of the coolant.

The epoxy-based sealing adhesive may be a first sealing adhesive, a second sealing adhesive, a third sealing adhesive, or a fourth sealing adhesive, where the bonding strength of the first sealing adhesive, the bonding strength of the third sealing adhesive, and the bonding strength of the fourth sealing adhesive are all greater than the bonding strength of the second sealing adhesive, the viscosity of the first sealing adhesive is greater than the viscosity of the third sealing adhesive, the viscosity of the first sealing adhesive is greater than the viscosity of the fourth sealing adhesive, and the viscosity of the third sealing adhesive is less than the viscosity of the fourth sealing adhesive.

In some embodiments, in order to prevent the coolant from seeping into an optical path between the lens assembly and the optical fiber holder via a gap between the lens assembly and the optical fiber holder, a second seal is disposed between the optical fiber holder and the lens assembly after the optical fiber holder is inserted into the lens assembly.

By way of example, the lens assembly is provided with an engaging groove, and the optical fiber holder is placed in the engaging groove, that is, three side faces of the engaging groove are respectively arranged corresponding to corresponding side faces of the optical fiber holder, and an engaging surface of the engaging groove is arranged corresponding to a first end face of the optical fiber holder. After the optical fiber holder is placed in the engaging groove, the first sealing adhesive is injected into a gap between the engaging groove and the optical fiber holder (including gaps between the three side faces of the engaging groove and the side faces of the optical fiber holder, and a gap between the engaging surface of the engaging groove and the first end face of the optical fiber holder). After the first sealing adhesive is cured, the second seal is formed to prevent the coolant from seeping via the gap between the optical fiber holder and the engaging groove.

However, when the first sealing adhesive is injected into the gap between the engaging surface of the engaging groove and the first end face of the optical fiber holder (a surface of the optical fiber holder facing the lens assembly), the first sealing adhesive may seep into the first end face of the optical fiber holder and further seep into the optical path between the lens assembly and the optical fiber holder, thereby affecting the overall optical path of the optical transceiver component.

To solve this problem, a shielding member is provided to shield the gap between the lens assembly and the first end of the optical fiber holder, and the first sealing adhesive is dispensed on an outer side wall of the shielding member, such that the first end face of the optical fiber holder is relatively far from the position where the first sealing adhesive is located, thereby making it less likely for the first end face of the optical fiber holder to be contaminated by the first sealing adhesive.

In some embodiments, the shielding member is integrally formed with other structures of the lens assembly, where the shielding member and the engaging groove form a wrapping cavity, and the shielding member is a side wall of the wrapping cavity away from the circuit board.

In some other embodiments, the shielding member and other structures of the lens assembly are mutually independent structural members, where the shielding member is a sealing cover plate, one end of the sealing cover plate is covered on the optical fiber holder, and the other end of the sealing cover plate is covered on an optical port groove.

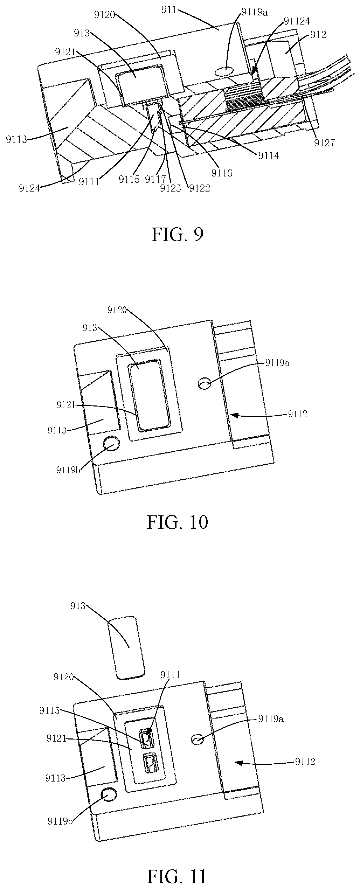

FIG. 7 is a structural diagram of a first optical transceiver component according to an embodiment of the present disclosure. FIG. 8 is an exploded view of a first optical transceiver component according to an embodiment of the present disclosure. FIG. 9 is a cross-sectional view of a first optical transceiver component according to an embodiment of the present disclosure. As shown in FIG. 7, FIG. 8, and FIG. 9, in some embodiments, the first optical transceiver component 901 includes a first lens assembly 911 and an optical fiber holder 912, where one end of the first lens assembly 911 is provided with a wrapping cavity 9112, one side of the wrapping cavity 9112 is provided with an opening, one end of the optical fiber holder 912 is fixedly connected to an optical fiber 9127, and the optical fiber holder 912 carrying the optical fiber 9127 is inserted into the wrapping cavity 9112 through the opening to achieve a connection between the optical fiber holder 912 and the first lens assembly 911.

After the optical fiber holder 912 is inserted into the wrapping cavity 9112, the wrapping cavity 9112 wraps around the optical fiber holder 912, the first end face of the optical fiber holder 912 is embedded in the wrapping cavity 9112, and the first sealing adhesive is dispensed on an adhesive-dispensing face 91124 of the wrapping cavity 9112, such that the first end face of the optical fiber holder 912 is relatively far from the position where the first sealing adhesive is located, thereby making it less likely for the first end face of the optical fiber holder 912 to be contaminated by the first sealing adhesive. After the first sealing adhesive is cured, the second seal is formed, where the second seal is located on the side face of the optical fiber holder 912 and around the adhesive-dispensing face 91124 of the wrapping cavity 9112 to isolate the coolant. That is, after the optical fiber holder 912 is inserted into the wrapping cavity 9112, the first sealing adhesive is dispensed on the adhesive-dispensing face 91124 of the wrapping cavity 9112, such that the first sealing adhesive completely seals a gap between the wrapping cavity 9112 and the optical fiber holder 912; and the first sealing adhesive accumulates between the wrapping cavity 9112 and the optical fiber holder 912, such that the second seal is formed after the first sealing adhesive is cured, thereby ensuring the sealing performance of a connection between the first lens assembly 911 and the optical fiber holder 912, and preventing seepage of the coolant.

After the optical fiber holder 912 is inserted into the wrapping cavity 9112, four side faces of the optical fiber holder 912 are respectively arranged corresponding to four side walls of the wrapping cavity 9112, and the first end face of the optical fiber holder 912 is arranged corresponding to an engaging wall of the wrapping cavity 9112, where the engaging wall of the wrapping cavity 9112 is located at a deep part of the wrapping cavity 9112 and away from the adhesive-dispensing face 91124 of the wrapping cavity 9112, that is, the first end face of the optical fiber holder 912 is located in the wrapping cavity 9112 and away from the adhesive-dispensing face 91124 of the wrapping cavity 9112.

A first lens 9116 is disposed in the wrapping cavity 9112, where the first lens 9116 is arranged corresponding to the optical fiber holder 912. The first lens 9116 includes a reception collimating lens and an emission coupling lens, where the emission coupling lens couples a light beam emitted by the first lens assembly 911, and the reception collimating lens collimates a light beam from the optical fiber 9127 in the optical fiber holder 912.

When the first lens assembly 911 is coupled and mounted onto the circuit board 300, it is necessary to form a gap between the first lens assembly 911 and the circuit board 300. For example, a suction nozzle can be used to hold the first lens assembly 911 to form a gap between the first lens assembly 911 and the circuit board 300, followed by coupling with the optical chip on the circuit board 300. If the first lens assembly 911 is uneven for its upper surface or does not have a sufficiently large plane, there is no space on the upper surface of the first lens assembly 911 to place the suction nozzle. Therefore, it is necessary to provide a relatively large adsorption plane on the upper surface of the first lens assembly 911 to place the suction nozzle, such that the suction nozzle can hold the first lens assembly 911.

In some embodiments, a top surface of a region of the first lens assembly 911 corresponding to the wrapping cavity 9112 is flush with a top surface of a region of the first lens assembly 911 other than the wrapping cavity 9112. In other words, the top surface of the first lens assembly 911 is a flat surface during manufacturing, and the wrapping cavity 9112 may be a groove formed in a side wall of the first lens assembly 911 via a demolding or milling process. The flush top surface can provide a relatively large adsorption plane for the suction nozzle, thereby facilitating the suction nozzle to hold the first lens assembly 911.

As shown in FIG. 7, FIG. 8, and FIG. 9, an optical port groove 9111 is formed in the region of the first lens assembly 911 other than the wrapping cavity 9112, a top surface of the optical port groove 9111 (a plane facing away from the circuit board 300) is provided with an opening, and the other end of a groove wall of the optical port groove 9111 (one end close to the circuit board 300) is formed with a reflective surface 9115, where the reflective surface 9115 is arranged opposite to the first lens 9116. In this way, an optical signal emitted by the optical chip 303 (specifically the optical emission chip 3031) is reflected by the reflective surface 9115, and the reflected light beam is emitted via the first lens 9116. The first lens 9116 reflects the received light beam transmitted from the optical fiber via the reflective surface 9115, and the reflected optical signal is incident onto the optical chip 303 (specifically the optical reception chip 3032).

The wrapping cavity 9112 wraps around respective side faces of the optical fiber holder 912, thereby increasing the thickness of a right side of the first lens assembly 911 (i.e., one end connected to the optical fiber holder 912). If the thickness of a left side of the first lens assembly 911 (i.e., one end not connected to the optical fiber holder 912) is not increased, the thickness ratio of the first lens assembly 911 may differ greatly. Therefore, it is necessary to increase the thickness of the left side of the first lens assembly 911, that is, to increase the thickness of the region of the first lens assembly 911 other than the wrapping cavity 9112 (a distance between the upper surface of the first lens assembly 911 and a lower surface of the first lens assembly 911). The thickness of the region of the first lens assembly 911 other than the wrapping cavity 9112 is increased, while the mounting height of the first lens 9116 remains unchanged. To enable the reflective surface 9115 to reflect the optical signal to the first lens 9116, the depth of the optical port groove 9111 is increased in some embodiments. With the increased depth of the optical port groove 9111, the distance between the opening of the optical port groove 9111 and the reflective surface 9115 is increased, thereby reducing seepage of the coolant into the reflective surface 9115 via the opening of the optical port groove 9111.

For example, when the top surface of the region of the first lens assembly 911 other than the wrapping cavity 9112 is higher than the top surface of the region of the first lens assembly 911 corresponding to the wrapping cavity 9112, the depth of the optical port groove 9111 is 1.8-2.2 mm; and when the top surface of the region of the first lens assembly 911 corresponding to the wrapping cavity 9112 is flush with the top surface of the region of the first lens assembly 911 other than the wrapping cavity 9112, the depth of the optical port groove 9111 is less than 1 mm.

To prevent the coolant from seeping into the reflective surface 9115, in some embodiments, one end of the groove wall of the optical port groove 9111 is provided with an adhesive-isolating protrusion, and a large number of third seals are disposed on the adhesive-isolating protrusion. The adhesive-isolating protrusion narrows the optical port groove 9111 to form a deep well groove. The first sealing adhesive is injected into the opening of the optical port groove 9111 to seal the opening of the optical port groove 9111, such that the external coolant is isolated from the reflective surface of the optical port groove 9111, thereby preventing the coolant from seeping into the reflective surface in the optical port groove 9111. Since the first sealing adhesive is viscous, the first sealing adhesive can only coat an upper part of the deep well groove (i.e., the adhesive-isolating protrusion of the optical port groove 9111), and air in a lower part of the deep well groove supports the first sealing adhesive, such that the first sealing adhesive cannot flow down onto the reflective surface 9115, thereby ensuring that the reflective surface 9115 is isolated from the external coolant and unaffected by the first sealing adhesive.

Since the opening is formed in the top surface of the optical port groove 9111, demolding of a plastic mold is facilitated. To prevent the coolant from seeping into the reflective surface 9115 via the opening of the optical port groove 9111, in some embodiments, a blocking assembly is disposed on the top surface at the opening of the optical port groove 9111, where the blocking assembly is fixed to the top surface of the optical port groove 9111 to seal the opening of the optical port groove 9111, thereby preventing seepage of the coolant via the opening of the optical port groove 9111.

In some embodiments, the blocking assembly includes a portion of a sealing cover plate, where one end of the sealing cover plate is covered on the optical fiber holder, and the other end of the sealing cover plate is covered on the optical port groove 9111 to seal the opening of the optical port groove 9111.

In some other embodiments, the blocking assembly includes a blocking sheet 913, where the blocking sheet 913 is fixed to the top surface of the optical port groove 9111 to seal the opening of the optical port groove 9111.

In some embodiments, a side face of the blocking sheet 913 facing the optical port groove 9111 is coated with back adhesive, and the blocking sheet 913 is adhered to the top surface of the optical port groove 9111 via the back adhesive, thereby fixing the blocking sheet 913 to the top surface of the optical port groove 9111.

In some embodiments, the blocking sheet 913 is made of a material that includes but is not limited to polyimide.

The size of the blocking sheet 913 is greater than the size of the opening of the optical port groove 9111, such that the blocking sheet 913 can completely block the opening of the optical port groove 9111. After the opening of the optical port groove 9111 is sealed by the blocking sheet 913, the first sealing adhesive can also be applied to a side face of the blocking sheet 913, that is, the first sealing adhesive is applied to a connection between the blocking sheet 913 and the surface of the first lens assembly 911. After the first sealing adhesive is cured, a third seal is formed. The third seal can seal the blocking sheet 913 and the opening of the optical port groove 9111, thereby reducing seepage of the coolant into the optical port groove 9111, and ensuring isolation between the optical port groove 9111 and the coolant.

However, the blocking sheet 913 is adhered to the opening of the optical port groove 9111 only via the back adhesive, and the adhesive strength of the back adhesive is insufficient, resulting in poor stability of a connection between the blocking sheet 913 and the opening of the optical port groove 9111, and thus poor sealing performance of the connection between the blocking sheet 913 and the opening of the optical port groove 9111, i.e., the blocking sheet 913 and the opening of the optical port groove 9111 cannot be completely sealed. To achieve complete sealing of the blocking sheet 913 and the opening of the optical port groove 9111, in some embodiments, the first sealing adhesive is applied to the upper part and periphery of the blocking sheet 913. That is, the first sealing adhesive is applied to the upper part of the blocking sheet 913, the connection between the blocking sheet 913 and the surface of the first lens assembly 911, and the surface of the first lens assembly 911. After the first sealing adhesive is cured, the third seal is formed. The third seal completely seals the blocking sheet 913 and the opening of the optical port groove 9111, thereby further reducing seepage of the coolant into the optical port groove 9111, and further ensuring isolation between the optical port groove 9111 and the coolant.

Since the first sealing adhesive is movable, its movement may easily cause the third seal formed after curing to fail to completely seal the blocking sheet 913 and the opening of the optical port groove 9111. To solve this problem, in some embodiments, a containing groove is formed on an outer side of the optical port groove 9111, that is, the containing groove is formed in the top surface of the first lens assembly 911, where the optical port groove 9111 is located at the bottom of the containing groove, the optical port groove 9111, the blocking sheet 913, and the third seal are disposed in the containing groove, and the third seal is located on the top and outer side wall of the blocking sheet 913. The first sealing adhesive is injected into the containing groove, such that the first sealing adhesive wraps the upper part of the blocking sheet 913, the connection between the blocking sheet 913 and the surface of the first lens assembly 911, and the surface of the first lens assembly 911. After the first sealing adhesive is cured, the third seal is formed. The third seal is located on the top and outer side wall of the blocking sheet 913 to achieve a stable connection between the blocking sheet 913 and the containing groove. The containing groove can confine the third seal to a preset position, such that the third seal is prevented from deviating from the preset position, thereby achieving complete sealing of the blocking sheet 913 and the opening of the optical port groove 9111, and further ensuring isolation between the optical port groove 9111 and the coolant.

In some embodiments, a containing groove is formed on an outer side of the optical port groove 9111, the optical port groove 9111, the blocking sheet 913, and the third seal are disposed in the containing groove, and one end of the groove wall of the optical port groove 9111 is provided with an adhesive-isolating protrusion. The containing groove can fix the third seal at a preset position to achieve complete sealing of the blocking sheet 913 and the opening, thereby preventing seepage of the coolant. The first sealing adhesive in the containing groove seeps into the adhesive-isolating protrusion of the optical port groove 9111 and wraps the adhesive-isolating protrusion, and the air in the lower part of the deep well groove supports the first sealing adhesive, such that the first sealing adhesive cannot flow down onto the reflective surface 9115, thereby ensuring that the reflective surface 9115 is isolated from the external coolant and unaffected by the first sealing adhesive.

In some embodiments, a containing groove is formed on an outer side of the optical port groove 9111, the optical port groove 9111, the blocking sheet 913, and the third seal are disposed in the containing groove, one end of the groove wall of the optical port groove 9111 is provided with an adhesive-isolating protrusion, and the adhesive-isolating protrusion is provided with a large number of third seals. The containing groove can fix the third seal at a preset position to achieve complete sealing of the blocking sheet 913 and the opening, thereby preventing seepage of the coolant. The first sealing adhesive in the containing groove seeps into the adhesive-isolating protrusion of the optical port groove 9111, the first sealing adhesive of the optical port groove 9111 wraps the adhesive-isolating protrusion, and the air in the lower part of the deep well groove supports the first sealing adhesive, such that the first sealing adhesive cannot flow down onto the reflective surface 9115, thereby ensuring that the reflective surface 9115 is isolated from the external coolant and unaffected by the first sealing adhesive. In some embodiments, the optical module includes two optical transceiver components disposed in a staggered manner. When the two optical transceiver components are placed too closely, the optical fiber connected to one optical transceiver component needs to cross over the other optical transceiver component, which easily leads to an excessively small bending radius of the optical fiber, thereby affecting optical fiber transmission. To solve this problem, the first lens assembly 911 is provided with an inclined surface 9113, where the inclined surface 9113 is inclined from the top surface of the first lens assembly 911 toward a side face of the first lens assembly 911 away from the optical fiber holder 912, that is, the inclined surface 9113 is a slope that inclines downward. The rear optical fiber inclines upward along the inclined surface 9113, such that the optical fiber has a large bending radius, thereby avoiding the problem of optical fiber transmission caused by the excessively small radius of the optical fiber.

As shown in FIG. 9, a covering cavity 9124 is formed on one side of the first lens assembly 911 facing the circuit board 300, where the covering cavity 9124 is recessed from the bottom surface of the first lens assembly 911 toward the top surface. In this way, when the first lens assembly 911 and the circuit board 300 are hermetically mounted, the covering cavity 9124 forms a sealed cavity. The optoelectronic devices such as an optical chip 303 and an optical matching chip 302 are located in the sealed cavity, which can prevent the coolant from seeping into the first lens assembly 911 and causing failure of the optoelectronic devices such as an optical chip 303 and an optical matching chip 302.

A second lens 9117 is disposed on an inner side wall of the covering cavity 9124, where the second lens 9117 is located below the reflective surface 9115, and the optical chip 303 is located below the second lens 9117. The second lens 9117 may be an emission collimating lens, and the optical chip 303 is an optical emission chip. In this way, the light beam emitted by the optical emission chip is converted into a collimated light beam via the emission collimating lens, the collimated light beam is emitted to the reflective surface 9115 for reflection, and the reflected collimated light beam is converted into a convergent light beam via the first lens 9116 and coupled into the optical fiber. The second lens may also be a reception coupling lens, and the optical chip 303 is an optical reception chip. In this way, the received light beam is emitted to the reflective surface 9115 via the first lens 9116 and is reflected by the reflective surface 9115, and the reflected received light beam is coupled to the optical reception chip via the reception coupling lens.

After the first sealing adhesive seals the gap between the first lens assembly 911 and the circuit board 300, the optical module needs to be placed in a high-temperature environment. After the first sealing adhesive seals the gap between the wrapping cavity 9112 and the optical fiber holder 912, the optical module also needs to be placed in a high-temperature environment. At a high temperature, the air in the cavity sealed by the first sealing adhesive will expand. If there is no vent hole, the expanding air will push out an air bubble in the uncured first sealing adhesive, resulting in seepage of the coolant. Therefore, a vent hole 9119 is further formed in the first lens assembly 911, where the vent hole 9119 is communicated with the covering cavity 9124 or the wrapping cavity 9112. The expanding air in the covering cavity 9124 or the wrapping cavity 9112 is released through the vent hole 9119. The second sealing adhesive is injected into the vent hole 9119 until it is full. After the second sealing adhesive is cured, a twelfth seal is formed. The twelfth seal can seal the vent hole 9119 to prevent the coolant from seeping into the first lens assembly 911 through the vent hole 9119.

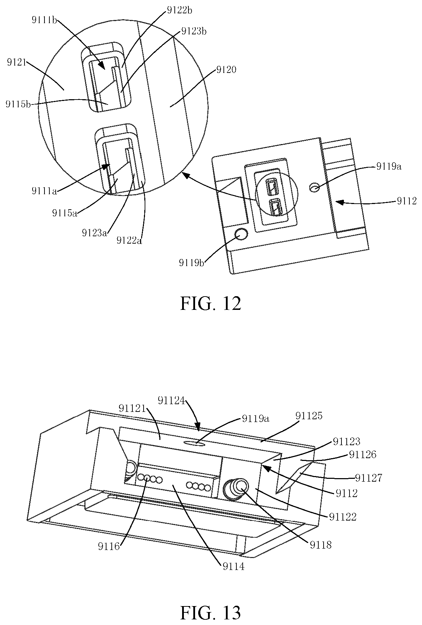

FIG. 10 is an assembly diagram of a first lens assembly and a blocking sheet according to an embodiment of the present disclosure. FIG. 11 is an exploded view of a first lens assembly and a blocking sheet according to an embodiment of the present disclosure. FIG. 12 is a structural diagram of a first lens assembly according to an embodiment of the present disclosure, viewed from a first perspective. As shown in FIG. 10, FIG. 11, and FIG. 12, in some embodiments, the containing groove includes a first containing groove 9120, where the blocking sheet 913 and the third seal are disposed in the first containing groove 9120, and the third seal is located on the top and outer side wall of the blocking sheet 913. After the blocking sheet 913 is mounted in the first containing groove 9120, the first containing groove 9120 is filled with the first sealing adhesive, where the height of the first sealing adhesive is greater than the height of the blocking sheet, such that the first sealing adhesive accumulates at the top of the blocking sheet 913. After the first sealing adhesive is cured, the third seal is formed. The first containing groove 9120 limits a position of the third seal on the surface of the first lens assembly 911, such that the third seal is prevented from deviating from the preset position, thereby achieving a stable connection between the blocking sheet 913 and the opening of the optical port groove 9111.

The depth of the first containing groove 9120 and the height of the third seal are both greater than the thickness of the blocking sheet 913, the length of the first containing groove 9120 is greater than the length of the blocking sheet 913, or the width of the first containing groove 9120 is greater than the width of the blocking sheet 913, such that the third seal is located on the top and outer side wall of the blocking sheet 913.

In some embodiments, the containing groove further includes a second containing groove 9121, where the second containing groove 9121 is formed by inward recessing of the first containing groove 9120, the third seal and the second containing groove 9121 are disposed in the first containing groove 9120, the blocking sheet 913 is placed in the second containing groove 9121, and the third seal is located on the top and outer side wall of the blocking sheet 913. After the blocking sheet 913 is mounted in the second containing groove 9121, the first containing groove 9120 is filled up with the first sealing adhesive, such that the first sealing adhesive accumulates at the top of the blocking sheet 913. After the first sealing adhesive is cured, the third seal is formed. The second containing groove 9121 limits a position of the blocking sheet 913 on the surface of the first lens assembly 911, such that the blocking sheet 913 is prevented from deviating from the preset position, and the blocking sheet 913 completely is covered on the opening of the optical port groove 9111, thereby achieving a stable connection between the blocking sheet 913 and the second containing groove 9121.

The length of the second containing groove 9121 may be greater than the length of the blocking sheet 913, or the width of the second containing groove 9121 is greater than the width of the blocking sheet 913, such that the blocking sheet 913 and the third seal can be placed in the second containing groove 9121. After the blocking sheet 913 is mounted in the second containing groove 9121, the first sealing adhesive is injected into a gap between the blocking sheet 913 and the second containing groove 9121, and the first containing groove 9120 is filled up with the first sealing adhesive, such that the first sealing adhesive accumulates on the outer side wall and top of the blocking sheet 913. After the first sealing adhesive is cured, the third seal is formed.

Certainly, in addition to the above arrangement of the first containing groove 9120 and the second containing groove 9121, an annular containing groove can also be formed around the opening of the optical port groove 9111, that is, there is a certain distance from the opening of the optical port groove 9111 to the annular containing groove. Correspondingly, the blocking sheet covered on the upper part of the optical port groove 9111 has the same size as a region enclosed by the annular containing groove, and an annular protruding block extending toward a bottom surface of the annular containing groove is disposed around the blocking sheet. During assembly, the blocking sheet with the annular protruding block can be engaged in the annular containing groove, and the first sealing adhesive is disposed in the annular containing groove. After the sealing adhesive is cured, the third seal is formed, such that the protruding block of the blocking sheet is sealed in the annular containing groove to achieve sealing of the optical port groove 9111.

As shown in FIG. 9, FIG. 10, FIG. 11, and FIG. 12, in some embodiments, the adhesive-isolating protrusion includes a first adhesive-isolating protrusion 9122, where the first adhesive-isolating protrusion 9122 is formed by outward protrusion of the groove wall of the optical port groove 9111, and the first adhesive-isolating protrusion 9122 narrows the optical port groove 9111 to form a deep well groove. Since the first sealing adhesive is viscous, the first sealing adhesive can only coat the first adhesive-isolating protrusion 9122 at an upper part of the deep well groove, and air in a lower part of the deep well groove supports the first sealing adhesive, such that the first sealing adhesive cannot flow down onto the reflective surface 9115, thereby ensuring that the reflective surface 9115 is isolated from the external coolant and unaffected by the first sealing adhesive.

In some embodiments, a first adhesive-isolating protrusion 9122 is formed by outward protrusion of one groove wall of the optical port groove 9111, where the first adhesive-isolating protrusion 9122 is a non-closed annular protrusion, and the non-closed annular protrusion together with the opening of the optical port groove 9111 forms a first-level step.

In some embodiments, a first adhesive-isolating protrusion 9122 is formed by outward protrusion of all groove walls of the optical port groove 9111, where the first adhesive-isolating protrusion 9122 is a closed annular protrusion, and the closed annular protrusion together with the opening of the optical port groove 9111 forms a first-level step.

In some embodiments, a first adhesive-isolating protrusion 9122 is formed by outward protrusion of all groove walls of the optical port groove 9111, where the first adhesive-isolating protrusion 9122 includes a plurality of closed annular protrusions which are sequentially connected and have different sizes. The plurality of closed annular protrusions form an N1-level step in ascending order of size. The N1-level step together with the opening of the optical port groove 9111 forms an N1+1-level step, where N1 ≥ 2.

Compared with the non-closed annular protrusion of the same width, the closed annular protrusion of the same width reduces the size of the optical port groove 9111 and increases the capacity of the first sealing adhesive that can be accommodated. Thus, the reflective surface of the first lens assembly 911 with a closed annular protrusion is less likely to be affected by the external coolant and the first sealing adhesive than the reflective surface of the first lens assembly 911 with a non-closed annular protrusion.

The maximum width of a plurality of closed annular protrusions is the same as the width of a single closed annular protrusion. Compared with the single closed annular protrusion, the plurality of closed annular protrusions reduce the size of the optical port groove 9111 and increase the capacity of the first sealing adhesive that can be accommodated. Thus, the reflective surface of the first lens assembly 911 with a plurality of closed annular protrusions is less likely to be affected by the external coolant and the first sealing adhesive than the reflective surface of the first lens assembly 911 with a single closed annular protrusion.

In some embodiments, the adhesive-isolating protrusion further includes a second adhesive-isolating protrusion 9123, where the second adhesive-isolating protrusion 9123 is formed by outward protrusion of a first groove wall where the first adhesive-isolating protrusion 9122 is located (referring to a groove wall of the optical port groove 9111 where the reflective surface is located), and the second adhesive-isolating protrusion 9123 further narrows the optical port groove 9111 to form a deep well groove. Since the first sealing adhesive is viscous, the first sealing adhesive can only coat the first adhesive-isolating protrusion 9122 and the second adhesive-isolating protrusion 9123 at an upper part of the deep well groove, and air in a lower part of the deep well groove supports the first sealing adhesive, such that the first sealing adhesive cannot flow down onto the reflective surface 9115, thereby ensuring that the reflective surface 9115 is isolated from the external coolant and unaffected by the first sealing adhesive.

In some embodiments, a second adhesive-isolating protrusion 9123 is formed by outward protrusion of the first groove wall of the optical port groove 9111, where the second adhesive-isolating protrusion 9123 is a non-closed annular protrusion. The non-closed annular protrusion, the first adhesive-isolating protrusion 9122, and the opening of the optical port groove 9111 form an M-level step, where M is greater than 2.

In some embodiments, a second adhesive-isolating protrusion 9123 is formed by outward protrusion of the first groove wall of the optical port groove 9111, where the second adhesive-isolating protrusion 9123 includes a plurality of non-closed annular protrusions which are sequentially connected and have different sizes. The plurality of non-closed annular protrusions form an N2-level step in ascending order of size. The N2-level step, the first adhesive-isolating protrusion 9122, and the opening of the optical port groove 9111 form an N1+N2+1-level step, where N1 ≥ 2, and N2 ≥ 2.

As shown in FIG. 12, in some embodiments, the reflective surface 9115 includes an emission reflective surface 9115a and a reception reflective surface 9115b, where the emission reflective surface 9115a is arranged corresponding to the emission collimating lens and the optical emission chip 3031, and the reception reflective surface 9115b is arranged corresponding to the reception coupling lens and the optical reception chip 3032. The optical signal emitted by the optical emission chip 3031 is reflected by the emission reflective surface 9115a, and the reflected optical signal is emitted via the first lens 9116. The first lens 9116 reflects the received optical signal transmitted from the optical fiber via the reception reflective surface 9115b, and the reflected optical signal is incident onto the optical reception chip 3032.

In some embodiments, there is only one optical port groove 9111, without distinguishing between an emission optical port groove and a reception optical port groove. The first adhesive-isolating protrusion 9122, the second adhesive-isolating protrusion 9123, and the reflective surface 9115 are disposed in the optical port groove. The reflective surface 9115 includes an emission reflective surface 9115a and a reception reflective surface 9115b, where the emission reflective surface 9115a is communicated with the reception reflective surface 9115b. The first lens assembly 911 is provided with only one optical port groove 9111, which facilitates processing.

In some other embodiments, the optical port groove 9111 includes an emission optical port groove 9111a and a reception optical port groove 9111b, where the emission optical port groove 9111a is separated from the reception optical port groove 9111b. An emission adhesive-isolating protrusion is disposed in the emission optical port groove 9111a, and a reception adhesive-isolating protrusion is disposed in the reception optical port groove 9111b, where the emission adhesive-isolating protrusion is not communicated with the reception adhesive-isolating protrusion. The emission adhesive-isolating protrusion includes a first emission adhesive-isolating protrusion 9122a, where a second emission adhesive-isolating protrusion 9123a that protrudes outward is disposed at one end of the first groove wall where the first emission adhesive-isolating protrusion 9122a is located, the other end of the first groove wall where the first emission adhesive-isolating protrusion 9122a is located is formed with an emission reflective surface 9115a, and the first emission adhesive-isolating protrusion 9122a and the second emission adhesive-isolating protrusion 9123a are in a stepped shape to narrow the emission optical port groove 9111a. The reception adhesive-isolating protrusion includes a first reception adhesive-isolating protrusion 9122b, where a second reception adhesive-isolating protrusion 9123b that protrudes outward is disposed at one end of the first groove wall where the first reception adhesive-isolating protrusion 9122b is located, the other end of the first groove wall where the first reception adhesive-isolating protrusion 9122b is located is formed with a reception reflective surface 9115b, the first reception adhesive-isolating protrusion 9122b and the second reception adhesive-isolating protrusion 9123b are in a stepped shape to narrow the reception optical port groove 9111b, and the emission reflective surface 9115a is not communicated with the reception reflective surface 9115b.

The first lens assembly 911 is provided with an emission optical port groove 9111a and a reception optical port groove 9111b. The emission optical port groove 9111a is separated from the reception optical port groove 9111b to further narrow the optical port groove 9111, which ensures that the first sealing adhesive cannot flow down onto the reflective surface 9115, thereby ensuring that the reflective surface 9115 is isolated from the coolant and unaffected by the first sealing adhesive.

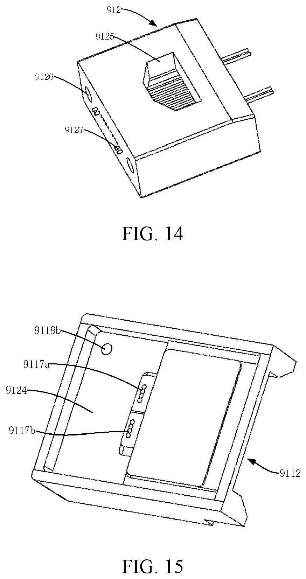

FIG. 13 is a structural diagram of a first lens assembly according to an embodiment of the present disclosure, viewed from a second perspective. FIG. 14 is a structural diagram of an optical fiber holder according to an embodiment of the present disclosure. As shown in FIGS. 13 and 14, in some embodiments, the wrapping cavity 9112 includes a first wrapping side wall 91121, an engaging wall 91122, a second wrapping side wall 91123, a third wrapping side wall, and a fourth wrapping side wall, where the first wrapping side wall 91121, the engaging wall 91122, the second wrapping side wall 91123, the third wrapping side wall, and the fourth wrapping side wall form a wrapping cavity 9112 with an opening, the first wrapping side wall 91121 is arranged opposite to the fourth wrapping side wall, the second wrapping side wall 91123 is arranged opposite to the third wrapping side wall, the engaging wall 91122 is arranged opposite to the opening of the wrapping cavity 9112, the first wrapping side wall 91121 and the fourth wrapping side wall are respectively connected to the engaging wall 91122, the second wrapping side wall 91123, and the third wrapping side wall, the second wrapping side wall 91123 and the third wrapping side wall are also respectively connected to the engaging wall 91122, the engaging wall 91122 is provided with a first positioning post 9118 and a first groove 9114 recessed toward the reflective surface 9115, and the first lens 9116 is disposed in the first groove 9114.

An outer side face 91125 of the first wrapping side wall 91121, an outer side face of the second wrapping side wall 91123, an outer side face of the third wrapping side wall, and the fourth wrapping side wall form the adhesive-dispensing face 91124 of the wrapping cavity 9112. The first sealing adhesive is dispensed on the adhesive-dispensing face 91124. After the first sealing adhesive is cured, the second seal is formed. The second seal is located on respective side faces of the optical fiber holder 912 and around the adhesive-dispensing face 91124 of the wrapping cavity 9112. That is, the first sealing adhesive is dispensed on the outer side face 91125 of the first wrapping side wall 91121, the outer side face of the second wrapping side wall 91123, the outer side face of the third wrapping side wall, and the fourth wrapping side wall. After the first sealing adhesive is cured, the second seal is formed. The second seal is located on respective side faces of the optical fiber holder 912 and around the outer side face of the first wrapping side wall 91121, the outer side face of the second wrapping side wall 91123, the outer side face of the third wrapping side wall, and the fourth wrapping side wall.

The first wrapping side wall 91121 is a side wall of the wrapping cavity 9112 away from the circuit board 300, and the fourth wrapping side wall is a side wall of the wrapping cavity 9112 close to the circuit board 300. Thus, outer side faces of three side walls of the wrapping cavity 9112 away from the circuit board 300 and one side wall of the wrapping cavity 9112 close to the circuit board 300 form the adhesive-dispensing face 91124 of the wrapping cavity 9112. That is, the second seal is located between respective side faces of the optical fiber holder 912 and the outer side faces of the three side walls of the wrapping cavity 9112 away from the circuit board 300, and around one side wall of the wrapping cavity 9112 close to the circuit board 300.

In some embodiments, the outer side face of the second wrapping side wall 91123 includes a first outer side portion 91126 and a second outer side portion 91127, where the first outer side portion 91126 is connected to the second outer side portion 91127, the first outer side portion 91126 is further connected to the outer side face 91125 of the first wrapping side wall 91121, and the first outer side portion 91126 is located between the outer side face 91125 of the first wrapping side wall 91121 and the second outer side portion 91127. The outer side face 91125 of the first wrapping side wall 91121 and the first outer side portion 91126 are vertical surfaces, and the second outer side portion 91127 is an inclined surface. It can be understood that the second outer side portion 91127 has an inclined surface, which can facilitate dispensing the first sealing adhesive between the second wrapping side wall 91123 and the side face of the optical fiber holder 912.

The second wrapping side wall 91123 and the third wrapping side wall are two symmetrical structural members, which will not be repeated herein.

As shown in FIG. 14, the first end face of the optical fiber holder 912 (a surface of the optical fiber holder 912 facing the first groove 9114) is provided with a through first positioning hole 9126. The first positioning hole 9126 is arranged opposite to the first positioning post 9118. In this way, when the optical fiber holder 912 is inserted into the wrapping cavity 9112, the first positioning post 9118 is inserted into the first positioning hole 9126 to position and mount the optical fiber holder 912.

Certainly, the first positioning post may also be disposed on the first end face of the optical fiber holder 912, and the first positioning hole adapted to the first positioning post is formed in the engaging wall 91122 of the wrapping cavity 9112, so as to achieve positioning and mounting between the optical fiber holder 912 and the lens assembly.

The first end face of the optical fiber holder 912 is further provided with an optical fiber hole, and a second end face of the optical fiber holder 912 (a surface opposite to the first end face of the optical fiber holder 912) is provided with an optical fiber jack. The optical fiber hole is communicated with the optical fiber jack, such that the optical fiber 9127 can be inserted into the optical fiber hole through the optical fiber jack. The light-incident surface of the optical fiber 9127 may be located inside the optical fiber holder 912 or may protrude from the first end face of the optical fiber holder 912.

The optical fiber 9127 is inserted into the optical fiber holder 912 through the optical fiber jack, and the first sealing adhesive is used to completely seal a gap between the optical fiber 9127 and the optical fiber jack. The first sealing adhesive is applied around a contact part between the optical fiber 9127 and the optical fiber jack, and accumulates on the optical fiber 9127 and the second end face of the optical fiber holder 912. After the first sealing adhesive is cured, a fourth seal is formed to prevent the coolant from entering the interior of the optical fiber holder 912 through the optical fiber jack.

As shown in FIG. 14, the top surface of the optical fiber holder 912 is further provided with an observation hole 9125, and the observation hole 9125 is communicated with the optical fiber hole in the optical fiber holder 912. The insertion of the optical fiber 9127 into the optical fiber holder 912 can be checked through the observation hole 9125. After the optical fiber 9127 is inserted into the optical fiber holder 912 through the optical fiber jack, the first sealing adhesive can be applied to the observation hole 9125 to form a seal, thereby sealing the observation hole 9125 with the seal, and preventing the coolant from seeping into the interior of the optical fiber holder 912 through the observation hole 9125.

In some embodiments, the first wrapping side wall 91121, the second wrapping side wall 91123, the third wrapping side wall, and the fourth wrapping side wall are respectively arranged corresponding to respective corresponding side faces of the optical fiber holder 912, and the engaging wall 91122 is arranged corresponding to the first end face of the optical fiber holder 912, thereby enabling the wrapping cavity 9112 to wrap the optical fiber holder 912.

In some embodiments, the length of the first wrapping side wall 91121 is less than or equal to the length of a side face of the optical fiber holder 912 corresponding to the first wrapping side wall 91121. An adhesive-dispensing needle can be directly placed on the optical fiber holder 912, which facilitates dispensing adhesive into a gap between the first wrapping side wall 91121 and the optical fiber holder 912 via the adhesive-dispensing needle.

In some embodiments, the length of the fourth wrapping side wall is less than the length of a side face of the optical fiber holder 912 corresponding to the fourth wrapping side wall. For example, regions in the optical fiber holder 912 other than the optical fiber 9127 are partially located outside the wrapping cavity 9112.

In some embodiments, the length of the fourth wrapping side wall is greater than or equal to the length of a side face of the optical fiber holder 912 corresponding to the fourth wrapping side wall, that is, regions in the optical fiber holder 912 other than the optical fiber 9127 are all located in the wrapping cavity 9112. The adhesive-dispensing needle can be directly placed on the fourth wrapping side wall of the wrapping cavity 9112, which facilitates dispensing adhesive into a gap between the fourth wrapping side wall and the optical fiber holder 912.

Since the length of the side face of the optical fiber holder 912 corresponding to the first wrapping side wall 91121 is the same as the length of the side face of the optical fiber holder 912 in contact with the fourth wrapping side wall, the length of the first wrapping side wall 91121 is less than the length of the fourth wrapping side wall. This not only allows the optical fiber holder 912 to be fully wrapped, but also facilitates dispensing adhesive into a gap between the wrapping cavity 9112 and the optical fiber holder 912 via the adhesive-dispensing needle.

FIG. 15 is a first structural diagram of a first lens assembly according to an embodiment of the present disclosure, viewed from a third perspective. As shown in FIG. 15, in some embodiments, the vent hole 9119 includes a first vent hole 9119a and a second vent hole 9119b, where the first vent hole 9119a is located above the wrapping cavity 9112, the second vent hole 9119b is located above the covering cavity, the first vent hole 9119a is communicated with the wrapping cavity 9112, and the second vent hole 9119b is communicated with the covering cavity 9124. The expanding air in the covering cavity 9124 is released through the second vent hole 911b. The second sealing adhesive is injected into the second vent hole 9119b until it is full. After the second sealing adhesive is cured, the twelfth seal is formed. The twelfth seal can seal the second vent hole 9119b to prevent the coolant from seeping into the covering cavity 9124 through the second vent hole 9119b.

The expanding air in the wrapping cavity 9112 is released through the first vent hole 9119a. The second sealing adhesive is injected into the first vent hole 9119a until it is full. After the second sealing adhesive is cured, the twelfth seal is formed. The twelfth seal can seal the first vent hole 9119a to prevent the coolant from seeping into the wrapping cavity 9112 through the first vent hole 9119a.

In some embodiments, the second seal does not spread beyond the first vent hole 9119a in a gap between the first wrapping side wall 91121 and the top surface of the optical fiber holder 912. In other words, the first vent hole 9119a is formed in the corresponding first wrapping side wall 91121 between the second seal and the engaging wall 91122, such that the second seal does not seal the first vent hole 9119a, thereby facilitating release of the expanding air from the wrapping cavity 9112 through the first vent hole 9119a.

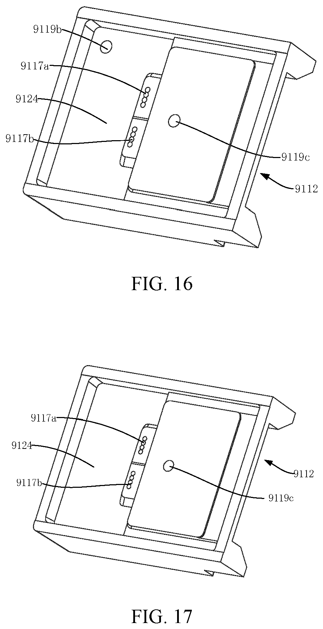

FIG. 16 is a second structural diagram of a first lens assembly according to an embodiment of the present disclosure, viewed from a third perspective. As shown in FIG. 16, in some embodiments, the vent hole 9119 includes a second vent hole 9119b and a vent hole 9119c, where the second vent hole 9119b is located above the covering cavity 9124, the vent hole 9119c is located below the wrapping cavity 9112, and the second vent hole 9119b is communicated with the covering cavity 9124. The expanding air in the covering cavity 9124 is released through the second vent hole 9119b. The expanding air in the wrapping cavity 9112 is released into the covering cavity 9124 through the vent hole 9119c, and then released through the second vent hole 9119b. The second sealing adhesive is injected into the second vent hole 9119b until it is full. After the second sealing adhesive is cured, the twelfth seal is formed. The twelfth seal can seal the second vent hole 911b to prevent the coolant from seeping into the covering cavity 9124.

FIG. 17 is a third structural diagram of a first lens assembly according to an embodiment of the present disclosure, viewed from a third perspective. As shown in FIG. 14 and FIG. 17, in some embodiments, the vent hole 9119 includes a first vent hole 9119a and a vent hole 9119c, where the first vent hole 9119a is located above the wrapping cavity 9112, the vent hole 9119c is located below the wrapping cavity 9112, and the first vent hole 9119a is communicated with the wrapping cavity 9112. The expanding air in the covering cavity 9124 is released into the wrapping cavity 9112 through the vent hole 9119c, and then released through the first vent hole 9119a. The expanding air in the wrapping cavity 9112 is released through the first vent hole 9119a. The second sealing adhesive is injected into the first vent hole 9119a until it is full. After the second sealing adhesive is cured, the twelfth seal is formed. The twelfth seal can seal the first vent hole 9119a to prevent the coolant from seeping into the covering cavity 9124.

As shown in FIG. 15, FIG. 16, and FIG. 17, the second lens 9117 includes an emission collimating lens 9117a and a reception coupling lens 9117b, where the emission collimating lens 9117a is arranged corresponding to the optical emission chip 3031 and the emission reflective surface 9115a, and the reception coupling lens 9117b is arranged corresponding to the optical reception chip 3032 and the reception reflective surface 9115b.

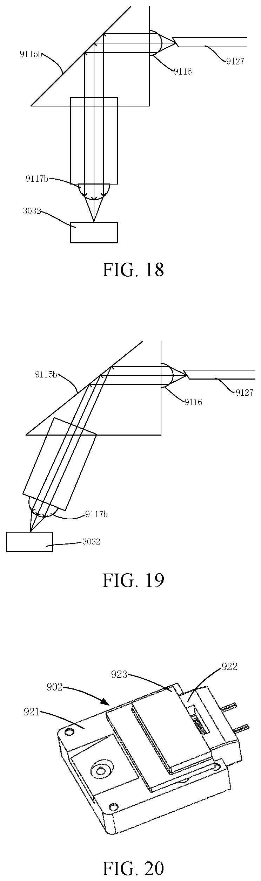

FIG. 18 is a first optical path diagram of a first optical transceiver component according to an embodiment of the present disclosure. FIG. 19 is a second optical path diagram of a second optical transceiver component according to an embodiment of the present disclosure. As shown in FIG. 18, in some embodiments, an included angle between the emission reflective surface 9115a and a horizontal plane is the same as that between the reception reflective surface 9115b and the horizontal plane, and both are 45°. An included angle between a surface where the emission collimating lens 9117a is located and the horizontal plane, and an included angle between a surface where the reception coupling lens 9117b is located and the horizontal plane are both 0°. The emission collimating lens 9117a and the reception coupling lens 9117b are disposed side by side along a width direction of the first lens assembly 911. The optical emission chip 3031 and the optical reception chip 3032 are disposed side by side along a width direction of the circuit board 300.

The optical emission chip 3031 emits a divergent light beam upward, the divergent light beam is converted into a collimated light beam by the emission collimating lens 9117a, the collimated light beam is emitted to the emission reflective surface 9115a for reflection, the reflected collimated light beam is converted into a convergent light beam by the emission coupling lens and coupled into the optical fiber, and the light beam is transmitted to the optical reception chip in the optical module at the other end of the optical fiber. The light beam emitted by the optical emission chip at the other end of the optical fiber is transmitted through the optical fiber to the reception collimating lens and is collimated into a collimated light beam by the reception collimating lens, the collimated light beam is emitted to the reception reflective surface 9115b for reflection, and the reflected collimated light beam is incident vertically downward onto the optical reception chip 3032 after being coupled by the reception coupling lens 9117b.

The included angle between the emission reflective surface 9115a and the horizontal plane is the same as that between the reception reflective surface 9115b and the horizontal plane. The emission optical port groove 9111a with an emission reflective surface 9115a is communicated with the reception optical port groove 9111b with a reception reflective surface 9115b to form an optical port groove 9111, that is, the emission reflective surface 9115a and the reception reflective surface 9115b form a reflective surface 9115, which facilitates processing and improves accuracy.

The included angle between the reception reflective surface 9115b and the horizontal plane is 45°. A part of the light beam vertically incident onto the optical reception chip 3032 returns along the original path to the optical fiber, which affects the performance of the optical emission chip at the other end of the optical fiber. To solve this problem, as shown in FIG. 19, in some embodiments, the included angle between the emission reflective surface 9115a and the horizontal plane is 45°, and the included angle α between the reception reflective surface 9115b and the horizontal plane is less than 45°. By way of example, the included angle α between the reception reflective surface 9115b and the horizontal plane is 30° to 38°, or the included angle α between the reception reflective surface 9115b and the horizontal plane is 39° to 42°.

The included angle between the emission reflective surface 9115a and the horizontal plane is 45°. The included angle between the surface where the emission collimating lens 9117a is located and the horizontal plane is 0°, the included angle α between the reception reflective surface 9115b and the horizontal plane is less than 45°. The surface where the reception coupling lens 9117b is located is moved backward relative to the surface where the emission collimating lens 9117a is located, and is inclined. That is, the included angle between the surface where the reception coupling lens 9117b is located and the horizontal plane changes from 0° to β. The emission collimating lens 9117a and the reception coupling lens 9117b are disposed in a staggered manner along the width direction of the first lens assembly 911. According to the law of reflection, it can be seen that a deflection angle γ between the reception reflective surface 9115b and the horizontal plane is 45° - α, and a deflection angle β between the surface where the reception reflective surface 9115b is located and the horizontal plane is 2γ, that is, the included angle β between the surface where the reception coupling lens 9117b is located and the horizontal plane is equal to 2 × (45° - α).

When the emission collimating lens 9117a and the reception coupling lens 9117b are disposed in a staggered manner along the width direction of the first lens assembly 911, the optical emission chip 3031 and the optical reception chip 3032 are disposed in a staggered manner along the width direction of the circuit board 300. A horizontal vertical distance L between the optical emission chip 3031 and the optical reception chip 3032 is equal to H × tanβ, where H is a vertical distance between the reflective surface 9115 and the optical chip 303.

The optical emission chip 3031 emits a divergent light beam upward, the divergent light beam is converted into a collimated light beam by the emission collimating lens 9117a, the collimated light beam is emitted to the emission reflective surface 9115a for reflection, the reflected collimated light beam is converted into a convergent light beam by the emission coupling lens and coupled into the optical fiber, and the light beam is transmitted to the optical reception chip in the optical module at the other end of the optical fiber. The light beam emitted by the optical emission chip at the other end of the optical fiber is transmitted through the optical fiber to the reception collimating lens and is collimated into a collimated light beam by the reception collimating lens, the collimated light beam is emitted to the reception reflective surface 9115b for reflection, and the reflected collimated light beam is incident obliquely downward onto the optical reception chip 3032 after being coupled by the reception coupling lens 9117b. The light beam obliquely incident onto the optical reception chip 3032 is reflected in the optical reception chip 3032, and the reflected light beam does not return along the original path but is inclined upward, thereby preventing the light beam returning to the optical fiber 9127 from affecting the performance of the optical emission chip at the other end of the optical fiber 9127.

The included angle between the emission reflective surface 9115a and the horizontal plane is different from that between the reception reflective surface 9115b and the horizontal plane. The emission optical port groove 9111a with an emission reflective surface 9115a is communicated with the reception optical port groove 9111b with a reception reflective surface 9115b to form an optical port groove 9111, that is, the emission reflective surface 9115a and the reception reflective surface 9115b form two reflective surfaces of different angles, which facilitates processing.

The included angle between the emission reflective surface 9115a and the horizontal plane is different from that between the reception reflective surface 9115b and the horizontal plane. The emission optical port groove 9111a with an emission reflective surface 9115a is not communicated with the reception optical port groove 9111b with a reception reflective surface 9115b, that is, the emission reflective surface 9115a is not communicated with the reception reflective surface 9115b, such that the optical port groove 9111 is narrowed, thereby ensuring that the second sealing adhesive cannot flow onto the reflective surface 9115.

In some embodiments, the first seal, the second seal, and the blocking assembly are used to isolate the coolant, thereby preventing the coolant from contaminating the optoelectronic devices in the first lens assembly; and the first end face of the optical fiber holder is embedded in the wrapping cavity and the adhesive-isolating protrusion is provided, such that the sealing adhesive is isolated, thereby avoiding contamination of an optical path between the first lens assembly and the optical fiber holder by the sealing adhesive, and ensuring normal operation of the optical module. In some embodiments, the first seal, the second seal, the blocking sheet, and the twelfth seal disposed in the first vent hole are used to isolate the coolant, thereby preventing the coolant from contaminating the optoelectronic devices in the first lens assembly; the first end face of the optical fiber holder is embedded in the wrapping cavity, such that the sealing adhesive is isolated, thereby avoiding contamination of the optical path between the first lens assembly and the optical fiber holder by the sealing adhesive, and ensuring normal operation of the optical module; and the second seal does not spread beyond the first vent hole in the gap between the top surface of the optical fiber holder and the wrapping cavity, thereby facilitating release of the air from the wrapping cavity.

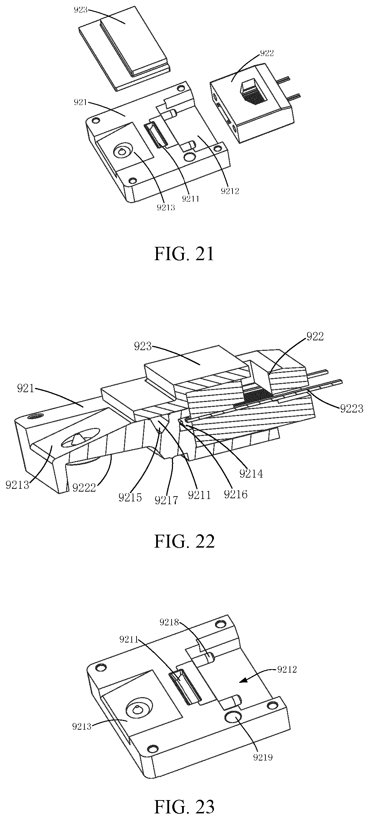

FIG. 20 is a structural diagram of a second optical transceiver component according to an embodiment of the present disclosure. FIG. 21 is an exploded view of a second optical transceiver component according to an embodiment of the present disclosure. FIG. 22 is a cross-sectional view of a second optical transceiver component according to an embodiment of the present disclosure. As shown in FIG. 20, FIG. 21, and FIG. 22, in some embodiments, the second optical transceiver component 902 includes a second lens assembly 921, an optical fiber holder 922, and a sealing cover plate 923, where the sealing cover plate 923 is disposed on the second lens assembly 921, one end of the second lens assembly 921 is provided with an engaging groove 9212, one end of the optical fiber holder 922 is fixedly connected to an optical fiber 9223, and the optical fiber holder 922 carrying the optical fiber 9223 is inserted into the engaging groove 9212 to achieve a connection between the optical fiber holder 922 and the second lens assembly 921. After the optical fiber holder 922 is inserted into the engaging groove 9212, the second seal is disposed between the optical fiber holder 922 and the engaging groove 9212. The second seal is located between respective side walls of the engaging groove 9212 and respective corresponding side faces of the optical fiber holder 922. That is, after the optical fiber holder 922 is inserted into the engaging groove 9212, gaps between respective side walls of the engaging groove 9212 and respective corresponding side faces of the optical fiber holder 922 are all sealed with the first sealing adhesive. The first sealing adhesive accumulates at connections between respective side walls of the engaging groove 9212 and respective corresponding side faces of the optical fiber holder 922, such that the second seal is formed after the first sealing adhesive is cured, thereby ensuring the sealing performance of connections between side faces of the optical fiber holder 922 other than its top surface and the second lens assembly 921, and preventing seepage of the coolant.

One end of the sealing cover plate 923 is covered on an optical port groove 9211 of the second lens assembly 921, and the other end of the sealing cover plate 923 is covered on the optical fiber holder 922 on the engaging groove 9212. The first end face of the optical fiber holder 922 is located at a bottom surface of the sealing cover plate 923. The first sealing adhesive is dispensed on an outer side wall of the sealing cover plate 923, such that the first end face of the optical fiber holder 922 is relatively far from the position where the first sealing adhesive is located, thereby making it less likely for the first end face of the optical fiber holder 922 to be contaminated by the first sealing adhesive. After the first sealing adhesive is cured, a fifth seal is formed. The fifth seal is located on the outer side wall of the sealing cover plate 923, the second lens assembly 921, and the optical fiber holder 922, thereby isolating the coolant. That is, after the sealing cover plate 923 is covered on the second lens assembly 921 and the optical fiber holder 922, the first sealing adhesive is dispensed on the outer side wall of the sealing cover plate 923, such that the first sealing adhesive seals all gaps between the sealing cover plate 923 and the second lens assembly 921 and the optical fiber holder 922; and the first sealing adhesive accumulates between the sealing cover plate 923 and the second lens assembly 921 and the optical fiber holder 922, such that the fifth seal is formed after the first sealing adhesive is cured, thereby ensuring the sealing performance of connections between the sealing cover plate 923 and the second lens assembly 921 and the optical fiber holder 922, and preventing seepage of the coolant.

As shown in FIG. 22, a first lens 9216 is disposed in the engaging groove 9212, where the first lens 9216 is arranged corresponding to the optical fiber holder 922. The first lens 9216 includes a reception collimating lens and an emission coupling lens, where the emission coupling lens couples a light beam emitted by the second lens assembly 921, and the reception collimating lens collimates a light beam from the optical fiber 9223 in the optical fiber holder 922.

As shown in FIG. 21 and FIG. 22, the second lens assembly 921 is provided with an optical port groove 9211, a top surface of the optical port groove 9211 (a plane facing away from the circuit board 300) is provided with an opening, and a groove wall of the optical port groove 9211 (one end facing the circuit board 300) is formed with a reflective surface 9215, where the reflective surface 9215 is arranged opposite to the first lens 9216. In this way, an optical signal emitted by the optical chip 303 (specifically the optical emission chip 3031) is reflected by the reflective surface 9215, and the reflected light beam is emitted via the first lens 9216. The first lens 9216 reflects the received light beam transmitted from the optical fiber via the reflective surface 9215, and the reflected optical signal is incident onto the optical chip 303 (specifically the optical reception chip 3032).

The reflective surface 9215 includes an emission reflective surface and a reception reflective surface, where the emission reflective surface is arranged corresponding to the emission collimating lens and the optical emission chip, and the reception reflective surface is arranged corresponding to the reception coupling lens and the optical reception chip 3032. The optical signal emitted by the optical emission chip 3031 is reflected by the emission reflective surface, and the reflected optical signal is emitted via the first lens 9216. The first lens 9216 reflects the received optical signal transmitted from the optical fiber via the reception reflective surface, and the reflected optical signal is incident onto the optical reception chip 3032.

Since the opening is formed in the top surface of the optical port groove 9211, demolding of a plastic mold is facilitated. To prevent the coolant from seeping into the second lens assembly 921 via the opening of the optical port groove 9211, the sealing cover plate 923 is covered on the optical port groove 9211. The size of the sealing cover plate 923 corresponding to the optical port groove 9211 is greater than the size of the opening of the optical port groove 9211, such that the sealing cover plate 923 can seal the opening of the optical port groove 9211, thereby reducing seepage of the coolant into the optical port groove 9211, and ensuring isolation between the optical port groove 9211 and the coolant.

In some embodiments, to prevent the first sealing adhesive from flowing onto the reflective surface 9215, an adhesive-isolating protrusion is disposed at one end of a groove wall of the optical port groove 9211. The adhesive-isolating protrusion narrows the optical port groove 9211 to form a deep well groove. Since the first sealing adhesive is viscous, the first sealing adhesive can only coat an upper part of the deep well groove (i.e., the adhesive-isolating protrusion of the optical port groove 9211), and air in a lower part of the deep well groove supports the first sealing adhesive, such that the first sealing adhesive cannot flow down onto the reflective surface 9215, thereby ensuring that the reflective surface 9215 is isolated from the external coolant and unaffected by the first sealing adhesive.

In some embodiments, the adhesive-isolating protrusion includes a first adhesive-isolating protrusion, where the first adhesive-isolating protrusion is formed by outward protrusion of the groove wall of the optical port groove 9211, and the first adhesive-isolating protrusion narrows the optical port groove 9211 to form a deep well groove. Since the first sealing adhesive is viscous, the first sealing adhesive can only coat the first adhesive-isolating protrusion at an upper part of the deep well groove, and air in a lower part of the deep well groove supports the first sealing adhesive, such that the first sealing adhesive cannot flow down onto the reflective surface 9215, thereby ensuring that the reflective surface 9215 is isolated from the external coolant and unaffected by the first sealing adhesive.

In some embodiments, the adhesive-isolating protrusion further includes a second adhesive-isolating protrusion, where the second adhesive-isolating protrusion is formed by outward protrusion of a first groove wall where the first adhesive-isolating protrusion is located (referring to a groove wall of the optical port groove 9211 where the reflective surface is located), and the second adhesive-isolating protrusion further narrows the optical port groove 9211 to form a deep well groove. Since the first sealing adhesive is viscous, the first sealing adhesive can only coat the first adhesive-isolating protrusion and the second adhesive-isolating protrusion at an upper part of the deep well groove, and air in a lower part of the deep well groove supports the first sealing adhesive, such that the first sealing adhesive cannot flow down onto the reflective surface 9215, thereby ensuring that the reflective surface 9215 is isolated from the external coolant and unaffected by the first sealing adhesive.

In some embodiments, the second lens assembly 921 is provided with an inclined surface 9213, where the inclined surface 9213 is inclined from the top surface of the second lens assembly 921 toward a side face of the second lens assembly 921 away from the optical fiber holder 912, that is, the inclined surface 9213 is a slope that inclines downward. The rear optical fiber 9223 inclines upward along the inclined surface 9213, such that the optical fiber 9223 has a large bending radius, thereby avoiding the problem of optical fiber transmission caused by the excessively small radius of the optical fiber.

As shown in FIG. 22, one side of the second lens assembly 921 facing the circuit board 300 is provided with a covering cavity 9222, and a second lens 9217 is disposed on an inner side wall of the covering cavity 9222, where the second lens 9217 is located below the reflective surface 9215, and the optical chip 303 is located below the second lens 9217. The second lens 9217 may be an emission collimating lens, and the optical chip 303 is an optical emission chip. In this way, the light beam emitted by the optical emission chip is converted into a collimated light beam via the emission collimating lens, the collimated light beam is emitted to the reflective surface 9215 for reflection, and the reflected collimated light beam is converted into a convergent light beam via the first lens 9216 and coupled into the optical fiber. The second lens may also be a reception coupling lens, and the optical chip 303 is an optical reception chip. In this way, the received light beam is emitted to the reflective surface 9215 via the first lens 9216 and is reflected by the reflective surface 9215, and the reflected received light beam is coupled to the optical reception chip via the reception coupling lens.

In some embodiments, the sealing cover plate 923 and the engaging groove 9212 form a wrapping cavity, and the sealing cover plate 923 is provided with a first vent hole. The expanding air in the wrapping cavity is released through the first vent hole. The second sealing adhesive is injected into the first vent hole until it is full. After the second sealing adhesive is cured, the twelfth seal is formed. The twelfth seal is configured to seal the first vent hole to prevent the coolant from seeping into the wrapping cavity through the first vent hole.

In some embodiments, the second lens assembly 921 is further provided with a second vent hole, where the second vent hole 9219 is located above the covering cavity 9222, and the second vent hole 9219 is communicated with the covering cavity 9222. The expanding air in the covering cavity 9222 is released through the vent hole 9219, thereby avoiding seepage of the coolant.

FIG. 23 is a structural diagram of a second lens assembly according to an embodiment of the present disclosure. As shown in FIG. 23, in some embodiments, the optical port groove 9211 includes only one optical port groove, where an emission reflective surface and a reception reflective surface are disposed in the optical port groove, and the emission reflective surface is communicated with the reception reflective surface.

In some embodiments, the optical port groove 9211 includes an emission optical port groove and a reception optical port groove, where the emission optical port groove is separated from the reception optical port groove, an emission adhesive-isolating protrusion and an emission reflective surface are disposed in the emission optical port groove, a reception adhesive-isolating protrusion and a reception reflective surface are disposed in the reception optical port groove, the emission adhesive-isolating protrusion is not communicated with the reception adhesive-isolating protrusion, and the emission reflective surface is not communicated with the reception reflective surface.

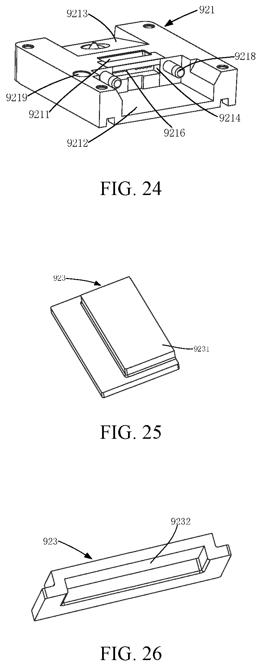

FIG. 24 is a structural diagram of a second lens assembly according to an embodiment of the present disclosure, viewed from another perspective. As shown in FIG. 24, in some embodiments, the engaging groove 9212 includes an engaging wall, a first engaging side wall, a second engaging side wall, and a third engaging side wall, where the engaging wall, the first engaging side wall, the second engaging side wall, and the third engaging side wall form the engaging groove 9212 with two openings (one opening faces upward, and the other opening faces right), the engaging wall, the second engaging side wall, and the third engaging side wall are respectively connected to the first engaging side wall, the second engaging side wall is arranged opposite to the third engaging side wall, the engaging wall is provided with a first positioning post 9218 and an inwardly recessed first groove 9214, and a second lens 9216 is disposed in the first groove.

In some embodiments, the first engaging side wall, the second engaging side wall, and the third engaging side wall are respectively arranged corresponding to respective corresponding side faces of the optical fiber holder 912, and the engaging wall is arranged corresponding to the first end face of the optical fiber holder 922, so as to achieve engagement of the optical fiber holder 922 in the engaging groove 9212.

The structure of the optical fiber holder 922 of the second optical transceiver component 902 is the same as that of the optical fiber holder 912 of the first optical transceiver component 901, and will not be repeated herein.

FIG. 25 is a structural diagram of a sealing cover plate according to an embodiment of the present disclosure. FIG. 26 is a structural diagram of a sealing cover plate according to an embodiment of the present disclosure, viewed from another perspective. As shown in FIG. 25 and FIG. 26, in some embodiments, a top surface of the optical fiber holder 922 is higher than a top surface of the second lens assembly 921, and a lower surface of the sealing cover plate 923 is provided with an inwardly recessed covering groove 9232, where respective faces of the covering groove 9232 are respectively connected to respective corresponding side faces of the optical fiber holder 922, and the depth of the covering groove 9232 is greater than or equal to a height difference between the top surface of the optical fiber holder 922 and the top surface of the second lens assembly 921. The depth of the covering groove 9232 is equal to the height difference between the top surface of the optical fiber holder 922 and the top surface of the second lens assembly 921, such that the sealing cover plate 923 is closely attached to the second lens assembly 921 and the optical fiber holder 922, thereby improving the sealing performance of connections between the sealing cover plate 923 and the second lens assembly 921 and the optical fiber holder 922.

In some embodiments, the top surface of the optical fiber holder 922 is flush with the top surface of the second lens assembly 921, and the lower surface of the sealing cover plate 923 does not need to be provided with an inwardly recessed covering groove 9232, i.e., respective points on the lower surface of the sealing cover plate 923 are flush.

In some embodiments, the covering groove 9232 includes a top wall, a first side wall, a second side wall, and a third side wall, where the first side wall, the second side wall, and the third side wall are respectively connected to the top wall, the top wall is connected to the top surface of the optical fiber holder 922 (a side face of the optical fiber holder 922 away from the circuit board 300), the first side wall and the third side wall are respectively connected to the side faces of the optical fiber holder 922, and the second side wall is connected to the first end face of the optical fiber holder 922.

In some embodiments, the sealing cover plate 923 is made of plastic, and the sealing cover plate 923 is formed by means of injection molding. An upper surface of the sealing cover plate 923 is not provided with a covering protrusion, i.e., respective positions on the upper surface of the sealing cover plate 923 are flush.

In some embodiments, the sealing cover plate 923 is made of a steel plate, and the sealing cover plate 923 is formed by means of stamping. The upper surface of the sealing cover plate 923 is provided with a covering protrusion 9231, where the covering protrusion 9231 is arranged corresponding to the covering groove 9232.

In this application, the first seal, the second seal, the sealing cover plate, and the fifth seal are used to isolate the coolant, thereby preventing the coolant from contaminating the optoelectronic devices in the second lens assembly; and the first end face of the optical fiber holder is located at the bottom surface of the sealing cover plate, such that the sealing adhesive is isolated, thereby avoiding contamination of an optical path between the second lens assembly and the optical fiber holder by the sealing adhesive, and ensuring normal operation of the optical module.

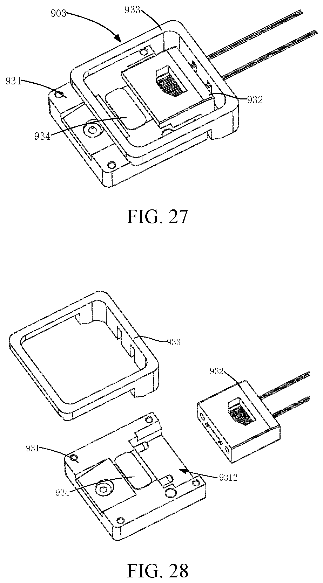

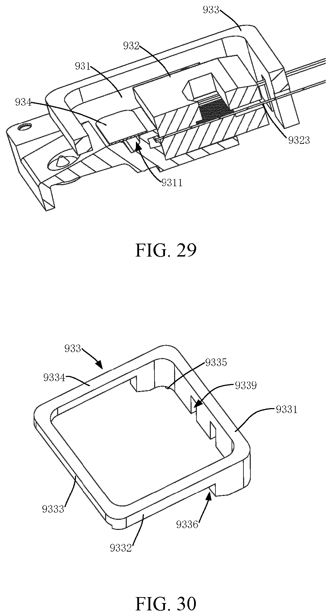

FIG. 27 is a structural diagram of a third optical transceiver component according to an embodiment of the present disclosure. FIG. 28 is an exploded view of a third optical transceiver component according to an embodiment of the present disclosure. FIG. 29 is a cross-sectional view of a third optical transceiver component according to an embodiment of the present disclosure. As shown in FIG. 27, FIG. 28, and FIG. 29, in some embodiments, the third optical transceiver component 903 includes a third lens assembly 931, an optical fiber holder 932, and a blocking sheet 934, where the third lens assembly 931 is provided with a recessed optical port groove 9311, a top surface of the optical port groove 9311 (a plane facing away from the circuit board 300) is provided with an opening, and the opening of the optical port groove 9311 is covered by the blocking sheet 934. One end of the third lens assembly 931 is provided with an engaging groove 9312, one end of the optical fiber holder 932 is fixedly connected to an optical fiber 9323, and the optical fiber holder 932 carrying the optical fiber 9323 is inserted into the engaging groove 9312 to achieve a connection between the optical fiber holder 932 and the third lens assembly 931.

The fourth sealing adhesive is dispensed into a gap between a first end face of the optical fiber holder 932 and the third lens assembly 931, where the viscosity of the fourth sealing adhesive is greater than the viscosity of the first sealing adhesive, such that the fourth sealing adhesive between the first end face of the optical fiber holder 932 and the third lens assembly 931 does not seep into the first end face of the optical fiber holder 932, thereby reducing contamination of the first end face of the optical fiber holder 932 by the first sealing adhesive. After the fourth sealing adhesive is cured, a thirteenth seal is formed to achieve a sealed connection between the first end face of the optical fiber holder 932 and the third lens assembly 931. That is, the engaging wall of the engaging groove 9312 is coated with the fourth sealing adhesive with high viscosity, the optical fiber holder 932 is inserted into the engaging groove 9312, and the fourth sealing adhesive completely seals a gap between the first end face of the optical fiber holder 932 and the engaging wall of the engaging groove 9312. After the fourth sealing adhesive is cured, the thirteenth seal is formed to ensure the sealed connection between the first end face of the optical fiber holder 932 and the third lens assembly 931.

In some embodiments, the third optical transceiver component 903 further includes a sealing dam 933, where the sealing dam 933 is covered on the circuit board 300 and the third lens assembly 931, a first end of the sealing dam 933 is fixed to the circuit board 300, a second end of the sealing dam 933 is fixed to the third lens assembly 931, the sealing dam 933, the circuit board 300, and the third lens assembly 931 form a containing cavity, the blocking sheet 934, the optical fiber holder 932, and a sixth seal are disposed in the containing cavity, and the sixth seal surrounds the blocking sheet 934 and the optical fiber holder 932 to seal gaps between the optical fiber holder and the third lens assembly and between the blocking sheet and the third lens assembly, thereby ensuring the sealing performance of connections between the blocking sheet 934 and the third lens assembly 931 and between the optical fiber holder 932 and the third lens assembly 931, and preventing seepage of the coolant.

The optical fiber holder 932 is inserted into the engaging groove 9312, the blocking sheet 934 is covered on the optical port groove 9311, and the sealing dam 933 is covered on the circuit board 300 and the third lens assembly 931. Then, the containing cavity is filled with the third sealing adhesive with low viscosity. The third sealing adhesive in the containing cavity surrounds the blocking sheet 934 and the optical fiber holder 932 to seal all gaps between the optical fiber holder 932 and the third lens assembly 931 and between the blocking sheet 934 and the third lens assembly 931. In this way, after the third sealing adhesive is cured, the sixth seal is formed, thereby ensuring the sealing performance of connections between the blocking sheet 934 and the third lens assembly 931 and between the optical fiber holder 932 and the third lens assembly 931, and preventing seepage of the coolant.

The thirteenth seal is used to prevent seepage of the sixth seal. The thirteenth seal can seal the gap between the first end face of the optical fiber holder 932 and the engaging wall of the engaging groove 9312, so as to prevent the third sealing adhesive from seeping into the first end face of the optical fiber holder 932 and contaminating an optical path between the optical fiber holder 932 and the third lens assembly 931.

The structure of the third lens assembly 931 of the third optical transceiver component 903 is the same as that of the second lens assembly 921 of the second optical transceiver component 902, and will not be repeated herein.

The optical path diagram of the third optical transceiver component 903 is the same as that of the second optical transceiver component 902, and will not be repeated herein.

The structure of the optical fiber holder 932 of the third optical transceiver component 903 is the same as that of the optical fiber holder 922 of the second optical transceiver component 902 and that of the optical fiber holder 912 of the first optical transceiver component 901, and will not be repeated herein.

However, the seal that flows into the optical port groove in the third lens assembly 931 is the sixth seal, and the adhesive-isolating protrusion in the optical port groove supports the sixth seal, such that the sixth seal cannot flow onto the reflective surface in the optical port groove.

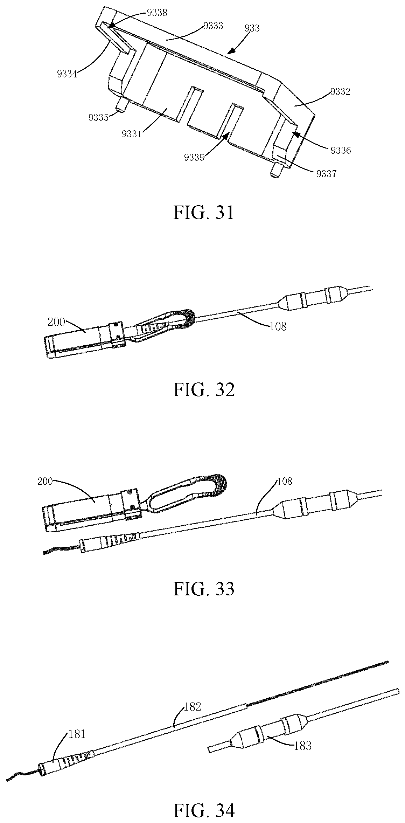

FIG. 30 is a structural diagram of a sealing dam according to an embodiment of the present disclosure. FIG. 31 is a structural diagram of a sealing dam according to an embodiment of the present disclosure, viewed from another perspective. As shown in FIG. 30 and FIG. 31, in some embodiments, the third lens assembly 931 is covered on the circuit board 300, where the height of the third lens assembly 931 is greater than the height of the circuit board 300, and the thickness of the first end of the sealing dam 933 is greater than the thickness of the second end of the sealing dam 933, such that one end of the sealing dam 933 is fixed to the circuit board 300, and the other end of the sealing dam 933 is fixed to the third lens assembly 931. Herein, the thickness refers to a distance between an upper surface of the structure and a lower surface of the structure.

In some embodiments, the sealing dam 933 is a container without an upper cover, thereby facilitating injection of the third sealing adhesive into the sealing dam 933; and the sealing dam 933 is an enclosure member without a lower cover, thereby facilitating seepage of the third sealing adhesive in the sealing dam 933 into gaps between the optical fiber holder 932 and the third lens assembly 931 and between the blocking sheet 934 and the third lens assembly 931.

The sealing dam 933 is a hollow enclosure member without upper and lower covers. The sealing dam 933, the circuit board 300, and the third lens assembly 931 form a containing cavity. The circuit board 300 and the third lens assembly 931 serve as a bottom surface of the containing cavity, and the sealing dam 933 serves as a side wall of the containing cavity. The optical fiber holder 932, the blocking sheet 934, and the sixth seal are arranged in the containing cavity.

In some embodiments, the sealing dam 933 is fixed to the circuit board 300 via adhesive.

In addition to the detachable connection between the sealing dam 933 and the third lens assembly 931 and the circuit board 300 as described above, in some other examples, the sealing dam 933 can be integrally formed with the third lens assembly 931. Certainly, in order to facilitate abutment between the optical fiber holder 932 and the third lens assembly 931, a clearance channel can be formed on one side of the sealing dam 933 close to the optical fiber holder 932. After the abutment between the optical fiber holder 932 and the third lens assembly 931 is completed, the clearance channel is blocked by the shielding member, such that the sealing dam forms the containing cavity between the circuit board 300 and the third lens assembly 931, and the third sealing adhesive is injected into the containing cavity to achieve sealing among the circuit board 300, the third lens assembly 931, and the optical fiber holder 932.

In some embodiments, the sealing dam 933 is fixed to the circuit board 300 via a second positioning post 9335. The bottom of one end of the sealing dam 933 is provided with a second positioning post 9335, and the circuit board 300 is provided with a second positioning hole. The second positioning hole is arranged corresponding to the second positioning post 9335. The second positioning post 9335 is inserted into the second positioning hole of the circuit board 300 to fix the sealing dam 933 to the circuit board 300. The sealing dam 933 is provided with the second positioning post 9335, which not only facilitates mounting and positioning of the sealing dam 933, but also facilitates fixing the sealing dam 933 to the circuit board 300.

In some embodiments, the sealing dam 933 is provided with one second positioning post 9335. One second positioning post 9335 is arranged corresponding to one second positioning hole in the circuit board 300. One second positioning post 9335 is inserted into one second positioning hole of the circuit board 300 to fix the sealing dam 933 to the circuit board 300.

In some embodiments, the sealing dam 933 is provided with two second positioning posts 9335. The two second positioning posts 9335 are respectively located at two sides of the bottom of one end of the sealing dam 933. The two second positioning posts 9335 are arranged corresponding to two second positioning holes in the circuit board 300. The two second positioning posts 9335 are respectively inserted into the corresponding second positioning holes of the circuit board 300 to fix the sealing dam 933 to the circuit board 300 more stably.

In addition to the second positioning posts 9335, the bottom of the first end of the sealing dam 933 is provided with a clearance hole 9339. The clearance hole 9339 is located between two second positioning posts 9335. The optical fiber 9323 is placed in the clearance hole 9339. The clearance hole 9339 is used to allow passage of the optical fiber 9323.

In some embodiments, a fourteenth seal is further disposed in the clearance hole 9339. The fourteenth seal is configured to seal a region of the clearance hole 9339 other than the optical fiber 9323, that is, the fourteenth seal is disposed in a region between the clearance hole 9339 and the optical fiber 9323 therein to prevent the third sealing adhesive with low viscosity in the containing cavity from flowing out via the clearance hole 9339. That is, after the sealing dam 933 is covered on the circuit board 300 and the third lens assembly 931, the optical fiber 323 is placed in the clearance hole 9339. The fourth sealing adhesive with high viscosity is injected into the clearance hole 9339. After the fourth sealing adhesive with high viscosity is cured, the fourth sealing adhesive with low viscosity is injected into the containing cavity. After the fourth sealing adhesive with low viscosity is cured, the sixth seal is formed.

In some embodiments, the number of clearance holes 9339 is greater than or equal to the number of optical fibers in the optical fiber holder, such that the sealing dam 933 allows passage of the optical fibers in the optical fiber holder. By way of example, when the optical fiber holder contains only one optical fiber, the sealing dam 933 is provided with at least one clearance hole 9339; when the optical fiber holder contains only two optical fibers, the sealing dam 933 is provided with at least two clearance holes 9339; and when the optical fiber holder contains only three optical fibers, the sealing dam 933 is provided with at least three clearance holes 9339.

The bottom of the second end of the sealing dam 933 is provided with a first engaging port 9336. The first engaging port 9336 is engaged on the third lens assembly 931. Two ends of the first engaging port 9336 are each provided with an engaging face 9337. The engaging face 9337 is arranged corresponding to the first seal located at the end of the third lens assembly 931. An inclination angle of the engaging face 9337 is the same as that of the first seal located at the end of the third lens assembly 931, such that the engaging face 9337 is in close contact with the first seal at the end of the third lens assembly 931, thereby ensuring the sealing performance of a connection between the sealing dam 933 and the end of the third lens assembly 931.

In some embodiments, one side of the first engaging port 9336 is provided with an inwardly recessed second engaging port 9338. The second engaging port 9338 is engaged on an upper surface of the third lens assembly 931 and an outer side wall of the third lens assembly 931, which not only ensures the stability of a connection between the sealing dam 933 and the third lens assembly 931 and prevents the sealing dam 933 from detaching from the third lens assembly 931, but also ensures the sealing performance of a connection between the sealing dam 933 and the top of the third lens assembly 931 and prevents the third sealing adhesive from flowing out along the outer side wall of the third lens assembly 931.

The sealing dam 933 includes a first dam side plate 9331, a second dam side plate 9332, a third dam side plate 9333, and a fourth dam side plate 9334. The first dam side plate 9331, the second dam side plate 9332, the third dam side plate 9333, and the fourth dam side plate 9334 are sequentially connected. The first dam side plate 9331, the second dam side plate 9332, the third dam side plate 9333, and the fourth dam side plate 9334 form an enclosure member without upper and lower covers. The first dam side plate 9331 is arranged opposite to the third dam side plate 9333, and the second dam side plate 9332 is arranged opposite to the fourth dam side plate 9334. The bottom of the first dam side plate 9331 is provided with a second positioning post 9335. The bottoms of the second dam side plate 9332, the third dam side plate 9333, and the fourth dam side plate 9334 are provided with a first engaging port 9336 and a second engaging port 9338. The first engaging port 9336 and the second engaging port 9338 are both U-shaped. The bottoms of the second dam side plate 9332 and the fourth dam side plate 9334 are each provided with an engaging face 9337.

In some embodiments, the second positioning post 9335 is inserted into the second positioning hole of the circuit board 300, and the bottom of the first dam side plate 9331 is in contact connection with the surface of the circuit board 300, thereby achieving a connection between the sealing dam 933 and the circuit board 300. The bottoms of the second dam side plate 9332, the third dam side plate 9333, and the fourth dam side plate 9334 are in contact connection with the third lens assembly 931, thereby achieving a connection between the sealing dam 933 and the third lens assembly 931.

In some embodiments, the height of a top surface of the sealing dam is greater than or equal to the height of the top surface of the optical fiber holder 932, the height of the top surface of the optical fiber holder 932 is greater than or equal to the height of a top surface of the blocking sheet 934 on the third lens assembly 931, and the height of a top surface of the sixth seal is greater than or equal to the height of the top surface of the optical fiber holder 932, such that the sixth seal can seal gaps between the optical fiber holder 932 and the third lens assembly 931 and between the blocking sheet 934 and the third lens assembly 931, thereby ensuring the sealing performance of connections between the optical fiber holder 932 and the third lens assembly 931 and between the blocking sheet 934 and the third lens assembly 931.

In this application, the first seal, the sealing dam, and the sixth seal are used to isolate the coolant, thereby preventing the coolant from contaminating the optoelectronic devices in the third lens assembly, and ensuring normal operation of the optical module.

The optical fiber 9127 of the first optical transceiver component 901, the optical fiber 9223 of the second optical transceiver component 902, and the optical fiber 9323 of the third optical transceiver component 903 are all optical fibers 101.

In some embodiments, the optical module 200 is detachably connected to the optical fiber 101, that is, the optical module 200 has a pluggable optical port. When the optical fiber 101 is inserted into or removed from the pluggable optical port, the optical fiber 101 can be connected to or disconnected from the optical port of the optical module 200. When the optical module is immersed in the coolant, the coolant easily enters the optical module via the pluggable optical port, thereby contaminating the optical module, and affecting optical transmission.

FIG. 32 is a structural diagram of an optical module carrying an optical cable according to an embodiment of the present disclosure. FIG. 33 is an exploded view of a shell of an optical module and an optical cable according to an embodiment of the present disclosure. As shown in FIG. 32 and FIG. 33, in some embodiments, the optical module 200 is fixedly connected to the optical fiber 101, where the optical fiber is an active optical fiber or a pigtail.

A plurality of optical fibers are combined to form an optical cable 108. The case where the optical module 200 is fixedly connected to the optical cable 108 means that the optical module 200 carries the optical cable 108. The optical cable 108 is an active optical cable (AOC) or an optical cable pigtail.

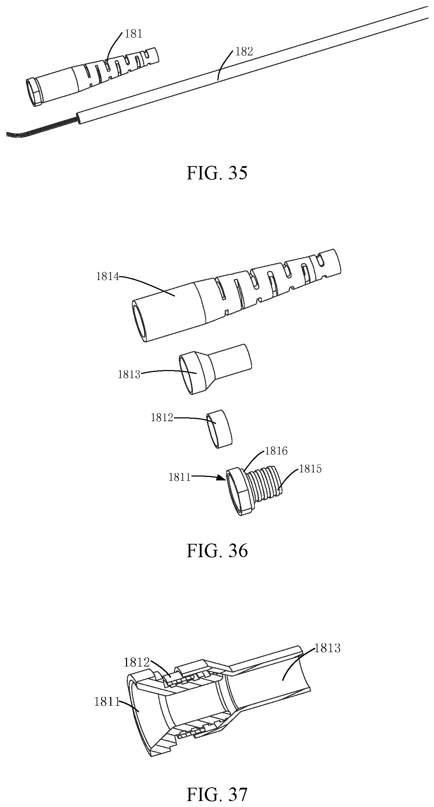

FIG. 34 is an exploded view of an optical cable according to an embodiment of the present disclosure. FIG. 35 is an exploded view of an optical cable fixation member and an optical cable body according to an embodiment of the present disclosure. As shown in FIG. 34 and FIG. 35, in some embodiments, the optical cable 108 may include an optical cable body 182. The optical cable body 182 can be extended from inside of the optical module 200 to outside of the optical module 200.

In some embodiments, the optical cable 108 may include an optical cable fixation member 181. The optical cable fixation member 181 may be located at a connection between the optical cable 108 and the optical module 200. The optical cable fixation member 181 can wrap one end of an outer side of the optical cable body 182 to prevent the coolant from seeping into the interior of the optical cable body 182. The optical cable fixation member 181 can be engaged on the optical module 200, such that the optical cable fixation member 181 is fixedly connected to the optical module 200.

In some embodiments, the optical cable 108 may include an isolation member 183. The isolation member 183 can be located in the middle of the optical cable 108. The isolation member 183 can wrap the middle of the outer side of the optical cable body 182 to isolate the coolant at one end of the optical cable 108, thereby preventing the coolant from seeping from one end of the optical cable body 182 to the other end of the optical cable body 182. The middle of the outer side of the optical cable body 182 is only used to indicate a location other than two ends of the outer side of the optical cable body 182, but does not indicate the exact center of the outer side of the optical cable body 182, that is, the middle of the outer side of the optical cable body 182 is not a midpoint of the outer side of the optical cable body 182.

The optical cable fixation member 181 can wrap one end of the outer side of the optical cable body 182 to prevent the coolant from seeping from inside of the optical module 200 into the interior of the optical cable body 182 outside the optical module 200; and the optical cable fixation member 181 can be engaged on the optical module 200 to prevent the coolant seeping into one end of the optical cable body 182 from seeping into the other end of the optical cable body 182.

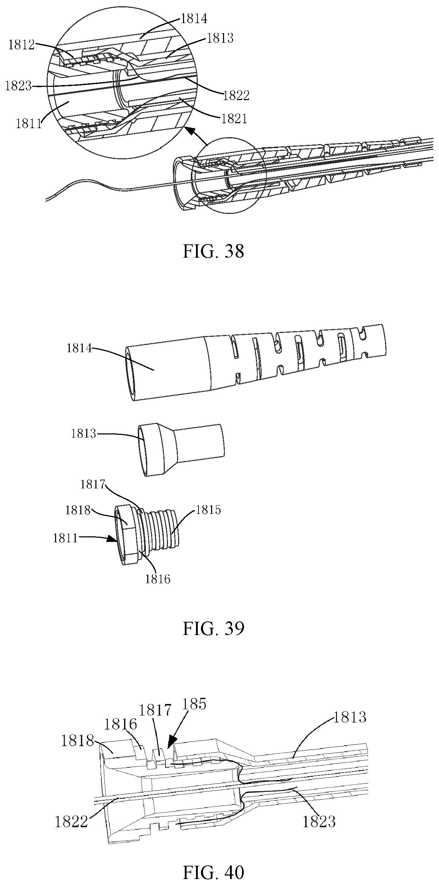

FIG. 36 is an exploded view of an optical cable fixation member according to an embodiment of the present disclosure. FIG. 37 is a cross-sectional view of a first crimping ring, a second crimping ring, and an engaging part according to an embodiment of the present disclosure. FIG. 38 is a cross-sectional view of an optical cable body and an optical cable fixation member according to an embodiment of the present disclosure. As shown in FIG. 36, FIG. 37, and FIG. 38, the optical cable body 182 located inside the optical module 200 includes only an optical fiber.

As shown in FIG. 36, FIG. 37, and FIG. 38, the optical cable body 182 located outside the optical module 200 may include a cable sheath 1821.

In some embodiments, an optical fiber 1822 (i.e., an optical fiber 101) can be disposed in the cable sheath 1821. The optical fiber 1822 can be extended from inside of the optical module 200 to outside of the optical module 200, that is, the optical fiber 1822 includes an optical fiber located inside the optical module 200 and an optical fiber located outside the optical module 200.

In some embodiments, reinforcement threads 1823 can be disposed in the cable sheath 1821. The reinforcement threads 1823 are made of Kevlar having excellent flexibility. The reinforcement threads 1823 can be located around the optical fiber 1822 to form a layer of protective film around the optical fiber 1822, thereby protecting the optical fiber 1822.

As shown in FIG. 36, FIG. 37, and FIG. 38, in some embodiments, the optical cable fixation member 181 includes an engaging part 1811. One end of the engaging part 1811 can be engaged at the optical port of the optical module 200. The other end of the engaging part 1811 can be arranged adjacent to the cable sheath 1821. The engaging part 1811 can be formed therein with a first cavity. The optical fiber 1822 can be disposed in the first cavity. The sealing adhesive can be disposed in the first cavity. After the sealing adhesive is cured, a seventh seal is formed. The seventh seal can fill a gap between an inner side wall of the engaging part 1811 and the optical fiber 1822, such that the seventh seal is seamlessly connected to the optical fiber 1822, thereby preventing the coolant inside the optical module 200 from seeping into the interior of the optical cable body 182 via the first cavity of the engaging part 1811.

In some embodiments, the sealing adhesive is a soft adhesive, such that the seventh seal not only has a sealing effect but also protects the optical cable. By way of example, the sealing adhesive is silicone.

In some embodiments, the engaging part 1811 may include an engaging part body 1815. The engaging part body 1815 can be located at a second end of the engaging part 1811, that is, one end of the engaging part 1811 away from the optical module 200.

In some embodiments, the engaging part 1811 may include a stop protrusion 1816. The stop protrusion 1816 can be located at a first end of the engaging part 1811, that is, one end of the engaging part 1811 close to the optical module 200. An inner side wall of the engaging part body 1815 and an inner side wall of the stop protrusion 1816 can form a first cavity.

As shown in FIG. 36, FIG. 37, and FIG. 38, in some embodiments, the optical cable fixation member 181 may include a first crimping ring 1813. A first end of the first crimping ring 1813 is crimped on the second end of the engaging part 1811, and reinforcement threads 1823 are disposed between the first crimping ring 1813 and the engaging part, such that one end of the first crimping ring 1813 can be crimped on the reinforcement threads 1823 on an outer side of the engaging part 1811. The other end of the first crimping ring 1813 can be crimped on the cable sheath 1821 to connect the optical cable fixation member 181 to the optical cable body 182.

In some embodiments, ends of the reinforcement threads 1823 (Kevlar) extend beyond the first crimping ring 1813 to ensure that the tensile strength of the optical cable body 182 meets the requirements.

However, when the ends of the reinforcement threads 1823 (Kevlar) extend beyond the first crimping ring 1813, the coolant may seep into the interior of the optical cable body 182 along the reinforcement threads 1823 (Kevlar).

To solve the technical problem of the coolant seeping into the interior of the optical cable body 182 along the reinforcement threads 1823 (Kevlar), as shown in FIG. 36, FIG. 37, and FIG. 38, in some embodiments, the optical cable fixation member 181 may include a second crimping ring 1812. The second crimping ring 1812 can be covered on an outer side of the engaging part body 1815. The second crimping ring 1812 can be located before the stop protrusion 1816. The reinforcement threads 1823 can be disposed between the second crimping ring 1812 and the outer side of the engaging part 1811 to crimp the reinforcement threads 1823 on the outer side of the engaging part body 1815. The reinforcement threads 1823 must not extend beyond a left end of the second crimping ring 1812 to reduce seepage of the coolant into the interior of the optical cable body 182 along the reinforcement threads 1823.

One end of the first crimping ring 1813 can be crimped on a right end of an outer side of the second crimping ring 1812, the middle of the first crimping ring 1813 can be crimped on the reinforcement threads 1823 on the outer side of the engaging part body 1815, and the other end of the first crimping ring 1813 can be crimped on the cable sheath 1821 to tightly clamp the optical cable fixation member 181 with the reinforcement threads 1823, thereby ensuring that the tensile strength of the optical cable 108 meets the requirements.

In some embodiments, the height of the second seal must not exceed the height of the first crimping ring 1813 to prevent the protective sleeve 1814 from being pushed to a fixed position of the engaging part 1811, that is, the protective sleeve 1814 is fixed before the stop protrusion 1816 of the engaging part 1811.

After the first crimping ring 1813 is crimped, it is necessary to observe whether the first crimping ring 1813 is flat, whether there are any broken threads, and whether the second crimping ring 1812 is clearly visible. After it is observed that the first crimping ring 1813 is flat, there are no broken threads, and the second crimping ring 1812 is clearly visible, a tensile test is performed to ensure that the tensile strength of the optical cable reaches 15 Kg/min.

After the tensile test is completed, the sealing adhesive is dispensed on the outer side of the second crimping ring 1812, and the sealing adhesive is dispensed at a connection between the first crimping ring 1813 and the optical cable body 182. After the sealing adhesive remains stationary for a period of time, the sealing adhesive on the outer side of the second crimping ring 1812 is cured to form a ninth seal to isolate the second crimping ring 1812 from the coolant, thereby preventing the coolant from seeping into the optical fiber 1822 inside the optical cable body 182 along the reinforcement threads 1823. The sealing adhesive at the connection between the first crimping ring 1813 and the optical cable body 182 is cured to form the ninth seal to seal a gap between the optical cable body 182 and the first crimping ring 1813, thereby ensuring a sealed connection between the first crimping ring 1813 and the optical cable body 182.

As shown in FIG. 36, FIG. 37, and FIG. 38, in some embodiments, the optical cable fixation member 181 may include a protective sleeve 1814. The protective sleeve 1814 can be covered on an eighth seal, the first crimping ring 1813, and the cable sheath 1821 to protect the optical cable body 182.

To solve the technical problem of the coolant seeping into the interior of the optical cable body 182 along the reinforcement threads 1823 (Kevlar), another optical cable fixation member is proposed in the present application.

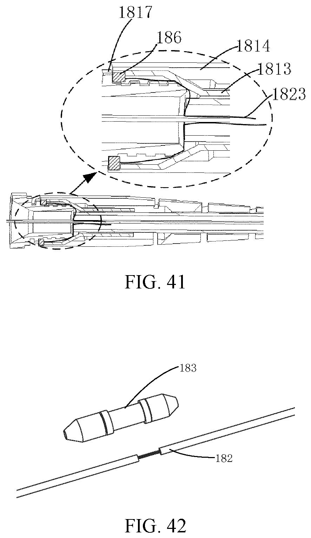

FIG. 39 is an exploded view of another optical cable fixation member according to an embodiment of the present disclosure. FIG. 40 is a cross-sectional view of a first crimping ring, another engaging part, and an optical cable body according to an embodiment of the present disclosure. FIG. 41 is a cross-sectional view of an optical cable and another optical cable fixation member according to an embodiment of the present disclosure. As shown in FIG. 39, FIG. 40, and FIG. 41, in some embodiments, the optical cable fixation member 181 may include an engaging part 1811. One end of the engaging part 1811 can be engaged at the optical port of the optical module 200. The other end of the engaging part 1811 can be arranged adjacent to the cable sheath 1821. The engaging part 1811 can be formed therein with a first cavity. The optical fiber 1822 can be disposed in the first cavity. The sealing adhesive can be disposed in the first cavity. After the sealing adhesive is cured, the seventh seal is formed. The seventh seal can fill a gap between an inner side wall of the engaging part 1811 and the optical fiber 1822, such that the seventh seal is seamlessly connected to the optical fiber 1822, thereby preventing the coolant inside the optical module 200 from seeping into the interior of the optical cable body 182 via the first cavity of the engaging part 1811.

In some embodiments, the engaging part 1811 may include a fixing protrusion 1818. The fixing protrusion 1818 can be located at a first end of the engaging part 1811, that is, one end of the engaging part 1811 close to the optical module 200. The fixing protrusion 1818 can be engaged at the optical port of the optical module 200.

In some embodiments, the engaging part 1811 may include an engaging part body 1815. The engaging part body 1815 can be located at a second end of the engaging part 1811, that is, one end of the engaging part 1811 away from the optical module 200.

In some embodiments, the engaging part 1811 may include a stop protrusion 1816. The stop protrusion 1816 can be located between the fixing protrusion 1818 and the engaging part body 1815. One end of the stop protrusion 1816 can be connected to the fixing protrusion 1818. An inner wall of the fixing protrusion 1818, an inner wall of the stop protrusion 1816, and an inner wall of the engaging part body 1815 form a first cavity.

As shown in FIG. 39, FIG. 40, and FIG. 41, in some embodiments, the optical cable fixation member 181 may include a first crimping ring 1813. One end of the first crimping ring 1813 can be crimped on the reinforcement threads 1823 on the outer side of the engaging part 1811. The other end of the first crimping ring 1813 can be crimped on the cable sheath 1821 to tightly clamp the optical cable fixation member 181 with the reinforcement threads 1823.

In some embodiments, ends of the reinforcement threads 1823 (Kevlar) extend beyond the first crimping ring 1813 to ensure that the tensile strength of the optical cable body 182 meets the requirements.

However, when the ends of the reinforcement threads 1823 (Kevlar) extend beyond the first crimping ring 1813, the coolant may seep into the interior of the optical cable body 182 along the reinforcement threads 1823 (Kevlar). To solve the technical problem of the coolant seeping into the interior of the optical cable body 182 along the reinforcement threads 1823 (Kevlar), in some embodiments, the sealing adhesive can be filled between the stop protrusion 1816 and the first crimping ring 1813. The reinforcement threads 1823 extending beyond the first crimping ring 1813 can be located between the stop protrusion 1816 and the first crimping ring 1813. After the sealing adhesive is cured, the eighth seal is formed. The reinforcement threads 1823 do not extend beyond the eighth seal, such that the reinforcement threads are inside the eighth seal, thereby reducing seepage of the coolant into the interior of the optical cable body 182 along the reinforcement threads 1823.

However, due to a long distance between the stop protrusion 1816 and the first crimping ring 1813, the sealing adhesive located between the stop protrusion 1816 and the first crimping ring 1813 may overflow everywhere. Furthermore, since the stop protrusion 1816 is connected to the fixing protrusion 1818, the sealing adhesive located between the stop protrusion 1816 and the first crimping ring 1813 may overflow to the fixing protrusion 1818, thereby affecting assembly of the optical cable fixation member and the optical module. To avoid these problems, in some embodiments, a limit protrusion 1817 can be disposed on an outer wall of the engaging part 1811. The limit protrusion 1817 can be located between the stop protrusion 1816 and the first crimping ring 1813, that is, the limit protrusion 1817 is disposed on a rear side of the stop protrusion 1816. The sealing adhesive can be filled between the limit protrusion 1817 and the first crimping ring 1813 to reduce overflow of the sealing adhesive to the fixing protrusion 1818.

The limit protrusion 1817, the outer side of the engaging part body 1815, and the first crimping ring 1813 form a U-shaped containing groove 185. The reinforcement threads 1823 extending beyond the first crimping ring 1813 is located in the containing groove 185. The containing groove 185 can be filled with the sealing adhesive. After the sealing adhesive is cured, the eighth seal 186 is formed. The reinforcement threads 1823 do not extend beyond the eighth seal 186, such that the reinforcement threads 1823 are inside the eighth seal 186, thereby reducing seepage of the coolant into the interior of the optical cable body 182 along the reinforcement threads 1823.

In some embodiments, the limit protrusion 1817 can be located between the stop protrusion 1816 and the engaging part body 1815, that is, the limit protrusion 1817 is closer to the cable sheath 1821 than the stop protrusion 1816, such that the limit protrusion 1817 is located between the stop protrusion 1816 and the first crimping ring 1813.

The sealing adhesive is dispensed at a connection between the first crimping ring 1813 and the optical cable body 182. After the sealing adhesive remains stationary for a period of time, the sealing adhesive at the connection between the first crimping ring 1813 and the optical cable body 182 is cured to form a seal to seal a gap between the optical cable body 182 and the first crimping ring 1813, thereby ensuring a sealed connection between the first crimping ring 1813 and the optical cable body 182.

In some embodiments, the height of the limit protrusion 1817 can be greater than the height of the engaging part body 1815, such that the first crimping ring 1813 crimped on the engaging part body 1815 can form a containing groove together with the limit protrusion 1817.

As shown in FIG. 39, FIG. 40, and FIG. 41, in some embodiments, the optical cable fixation member 181 may include a protective sleeve 1814. The protective sleeve 1814 can be covered on the cable sheath 1821 to protect the optical cable body 182. The protective sleeve 1814 can be covered on the first crimping ring 1813 to protect the first crimping ring 1813. The protective sleeve 1814 can be covered on the eighth seal to protect the eighth seal. The protective sleeve 1814 can be covered on the limit protrusion 1817 to protect the limit protrusion 1817. The protective sleeve 1814 can be covered on a gap between the limit protrusion 1817 and the stop protrusion 1816.

The protective sleeve 1814 is moved toward the optical module 200, such that the protective sleeve 1814 is successively covered on the cable sheath 1821, the first crimping ring 1813, the eighth seal, and the limit protrusion 1817.

In some embodiments, the height of the fixing protrusion 1818 can be greater than the height of the stop protrusion 1816, such that the protective sleeve 1814 is stopped before the fixing protrusion 1818.

In some embodiments, the height of the limit protrusion 1817 can be greater than the height of the first crimping ring 1813 to prevent the protective sleeve 1814 from being pushed only to the first crimping ring 1813 and not further toward the limit protrusion 1817.

In some embodiments, the height of the eighth seal in the containing groove 185 can be not greater than the height of the first crimping ring 1813 to prevent the protective sleeve 1814 from being pushed only to the first crimping ring 1813 and not further toward the eighth seal.

In some embodiments, the height of the limit protrusion 1817 can be greater than the height of the eighth seal in the containing groove 185 to prevent the protective sleeve 1814 from being pushed only to the eighth seal and not further toward the limit protrusion 1817.

In some embodiments, a gap exists between the limit protrusion 1817 and the stop protrusion 1816 to cooperate with other structural members, thereby facilitating assembly of the optical cable fixation member 181 and the optical module.

In some embodiments, the cable sheath 1821 of the optical cable body 182 located outside of the optical module 200 may be broken.

In some embodiments, the optical fiber 1822 of the optical cable body 182 located outside of the optical module 200 is unbroken.

In some embodiments, the reinforcement threads 1823 of the optical cable body 182 located outside of the optical module 200 may be broken.

In some embodiments, the optical cable body 182 located outside of the optical module 200 may be a first optical cable body. The first optical cable body may include an unbroken cable sheath 1821, an unbroken optical fiber 1822, and unbroken reinforcement threads 1823.

For the first optical cable body, an inner wall of the cable sheath 1821, the optical fiber 1822, and the reinforcement threads 1823 can be all coated with the sealing adhesive. The sealing adhesive is cured to form a seal. The seal wraps the inner wall of the cable sheath 1821, the optical fiber 1822, and the reinforcement threads 1823 to prevent the coolant from seeping from one end of the optical cable body 182 to the other end of the optical cable body 182. That is, when the optical cable body 182 located outside the optical module 200 is a first optical cable body, there is no need to arrange an isolation member in the middle of the optical cable body 182.

In some embodiments, the optical cable body 182 located outside the optical module 200 may be a second optical cable body. The second optical cable body may include a broken cable sheath 1821, an unbroken optical fiber 1822, and unbroken reinforcement threads 1823.

For the second optical cable body, an inner wall of the broken cable sheath 1821, the unbroken optical fiber 1822, and the unbroken reinforcement threads can be all coated with the sealing adhesive. The sealing adhesive is cured to form the seal. The seal wraps the inner wall of the cable sheath 1821, the optical fiber 1822, and the reinforcement threads 1823 to prevent the coolant from seeping from one end of the optical cable body 182 to the other end of the optical cable body 182. That is, when the optical cable body 182 located outside the optical module 200 is a third optical cable body, it is necessary to arrange an isolation member in the middle of the optical cable body 182 to prevent the coolant from seeping from one end of the optical cable body 182 to the other end of the optical cable body 182.

In some embodiments, the optical cable body 182 located outside the optical module 200 may be a third optical cable body. The third optical cable body may include a broken cable sheath 1821, an unbroken optical fiber 1822, and broken reinforcement threads 1823.

For the third optical cable body, an inner wall of the broken cable sheath 1821, an outer wall of the broken cable sheath 1821, a broken surface of the broken cable sheath 1821, outer walls of the broken reinforcement threads 1823, and an outer wall of the unbroken optical fiber 1822 can be coated with the sealing adhesive. The sealing adhesive is cured to form the seal. The seal wraps the inner wall of the cable sheath 1821, the outer wall of the broken cable sheath 1821, the broken surface of the broken cable sheath 1821, the outer walls of the broken reinforcement threads 1823, and the outer wall of the unbroken optical fiber 1822 to prevent the coolant from seeping from one end of the optical cable body 182 to the other end of the optical cable body 182. That is, when the optical cable body 182 located outside the optical module 200 is a second optical cable body, it is necessary to arrange an isolation member in the middle of the optical cable body 182 to prevent the coolant from seeping from one end of the optical cable body 182 to the other end of the optical cable body 182.

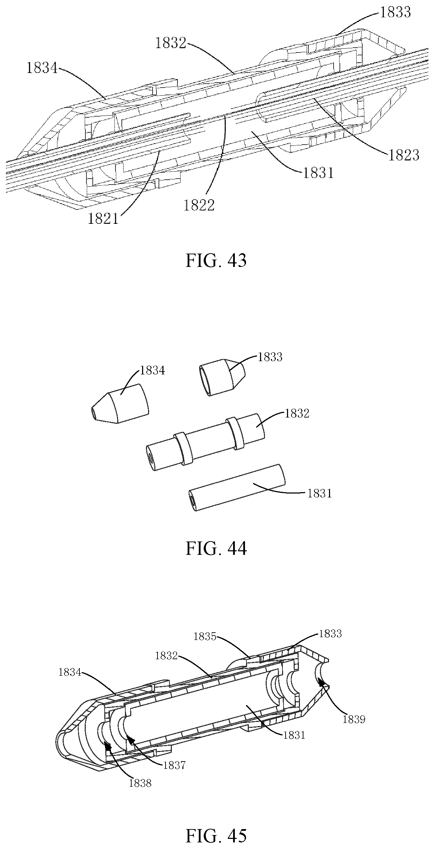

FIG. 42 is an exploded view of an optical cable body and an isolation member according to an embodiment of the present disclosure. FIG. 43 is a cross-sectional view of an optical cable body and an isolation member according to an embodiment of the present disclosure. As shown in FIG. 42 and FIG. 43, in some embodiments, the isolation member 183 may include an isolation sleeve 1831. The isolation sleeve 1831 can be formed therein with a second cavity. The optical cable body can be disposed in the second cavity. The seal can be disposed in the second cavity. The seal can fill a gap between the optical cable body and the isolation sleeve 1831 to prevent the coolant from seeping from one end of the optical cable body 182 to the other end of the optical cable body 182.

The optical cable body in the second cavity may be a second optical cable body or a third optical cable body. When the optical cable body 182 is a third optical cable body, reinforcement threads in the second cavity are broken. In some embodiments, the length of the broken reinforcement threads in the second cavity is 3-5 mm, thereby ensuring that the tensile strength of the isolation member 183 meets the requirements.

In some embodiments, the isolation sleeve 1831 may include a first isolation portion.

In some embodiments, the isolation sleeve 1831 may include a second isolation portion. The first isolation portion and the second isolation portion may be semicircular rings of the same shape.

The first isolation portion and the second isolation portion are connected to form the isolation sleeve 1831 having the second cavity. The sealing adhesive is dispensed at the bottom of the first isolation portion, and the cut optical cable body is mounted inside the first isolation portion and coated with a layer of sealing adhesive to completely seal two ends of the cut optical cable body; the second isolation portion is covered, and masking tape is used to fix the first isolation portion and the second isolation portion; and the fixed first isolation portion and second isolation portion are dried at a high temperature of 100°C for more than 1 hour, and the seal is formed after the sealing adhesive is cured.

In some embodiments, the isolation member 183 may include a first protective tube 1832. The first protective tube 1832 can be covered on the isolation sleeve 1831 to ensure the strength of the isolation sleeve 1831 and prevent the isolation sleeve 1831 from being broken at a connection between the first isolation portion and the second isolation portion to the greatest extent.

In some embodiments, the first protective tube 1832 can be formed therein with a third cavity. The isolation sleeve 1831 can be disposed in the third cavity. The eleventh seal can be disposed in the third cavity. The eleventh seal can be located between the isolation sleeve 1831 and the first protective tube 1832, and at two ends of the first protective tube 1832 to fill gaps between the optical cable body 182, the isolation sleeve 1831, and the first protective tube 1832, thereby achieving a stable connection between the isolation sleeve 1831 and the first protective tube 1832, and a sealed connection between the first protective tube 1832 and the optical cable body 182.

In some embodiments, the isolation member 183 may include a protective tail tube 1833. The protective tail tube 1833 can be covered on one end of the isolation sleeve 1831. The protective tail tube 1833 is arranged corresponding to a limit protrusion 1835 to limit an engaging position of the protective tail tube 1833 at the first protective tube 1832.

In some embodiments, the isolation member 183 may include a protective tail tube 1834. The protective tail tube 1834 can be covered on the other end of the isolation sleeve 1831. The protective tail tube 1834 is arranged corresponding to another limit protrusion 1835 to limit an engaging position of the protective tail tube 1834 at the first protective tube 1832.

The protective tail tube 1833 and the protective tail tube 1834 are respectively covered on the two ends of the isolation sleeve 1831 to protect the optical cable body. After the sealing adhesive in the isolation sleeve 1831 is cured to form a seal, the two ends of the isolation sleeve 1831 are respectively covered by the protective tail tube 1833.

In some embodiments, the protective tail tube may include an engaging end. One end of the engaging end can be covered on one end of the isolation sleeve 1831.

In some embodiments, the protective tail tube may include a protective end. One end of the protective end can be connected to the other end of the engaging end. The other end of the protective end can wrap around the optical cable body 182. Two ends of the protective end are not parallel, such that the protective end has a certain inclination angle.

In some embodiments, the inclination angle of the protective end is not equal to 90°, such that the stress received by the optical cable body 182 is reduced, thereby protecting the optical cable body 182.

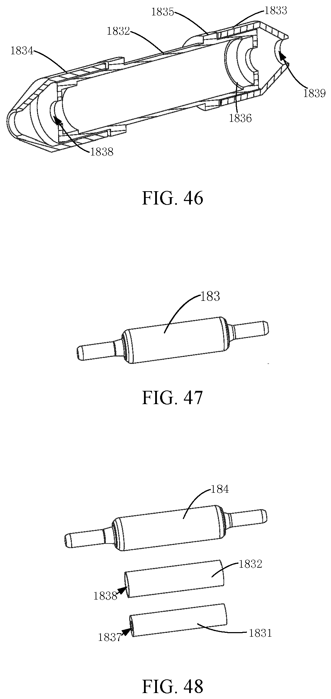

FIG. 44 is an exploded view of an isolation member according to an embodiment of the present disclosure. FIG. 45 is a cross-sectional view of an isolation member according to an embodiment of the present disclosure. FIG. 46 is a cross-sectional view of a first protective tube and a protective tail tube according to an embodiment of the present disclosure. As shown in FIG. 44, FIG. 45, and FIG. 46, in some embodiments, the isolation sleeve 1831 can be provided with a first through hole 1837. The optical cable body 182 can be passed through the first through hole 1837 to enter the isolation member 183 from outside of the isolation member 183.

In some embodiments, one end of the first protective tube 1832 can be provided with a second through hole 1838. The second through hole 1838 can be arranged corresponding to the first through hole 1837 to allow passage of the optical cable body 182, such that the optical cable body 182 is passed through the first through hole 1837 and the second through hole 1838.

In some embodiments, the protective tail tube 1833 can be provided with a third through hole 1839. The third through hole 1839 can be arranged corresponding to the first through hole 1837 and the second through hole 1838 to allow passage of the optical cable body 182, such that the optical cable body 182 is passed through the first through hole 1837, the second through hole 1838, and the third through hole 1839.

In some embodiments, limit protrusions 1835 can be disposed on an outer side of the first protective tube 1832. Two limit protrusions 1835 are respectively located at the two ends of the first protective tube 1832.

In some embodiments, a limit step 1836 can be disposed in the third cavity. The limit step 1836 is configured to limit a position of the isolation sleeve 1831 in the first protective tube 1832. For example, one end of the third cavity inside the first protective tube 1832 is provided with a limit step 1836, and the isolation sleeve 1831 is located between the other end of the third cavity and the limit step 1836 to limit a position of the isolation sleeve 1831 in the first protective tube 1832. For example, two ends of the third cavity inside the first protective tube 1832 are each provided with a limit step 1836, and the isolation sleeve 1831 is located between the two limit steps 1836 to limit a position of the isolation sleeve 1831 in the first protective tube 1832.

In some embodiments, regions in the third cavity other than the isolation sleeve 1831 are all provided with seals. The seals are located between the limit step 1836 and an inner side wall of the first protective tube 1832, and are configured not only to achieve a fixed connection between the isolation sleeve 1831 and the first protective tube 1832, but also to achieve a sealed connection between the first protective tube 1832 and the optical cable body 182, so as to further prevent seepage of the coolant.

After the sealing adhesive in the isolation sleeve 1831 is cured to form a seal, the isolation sleeve 1831 is coated with the sealing adhesive and inserted into the first protective tube 1832. The sealing adhesive is added to the two ends of the first protective tube 1832 for sealing, and then dried at a high temperature of 100°C for more than 1 hour. A seal is formed after the sealing adhesive is cured. After the sealing adhesive in the first protective tube 1832 is cured to form the seal, the two ends of the first protective tube 1832 are respectively coated with the sealing adhesive and then sleeved with the protective tail tube 1833.

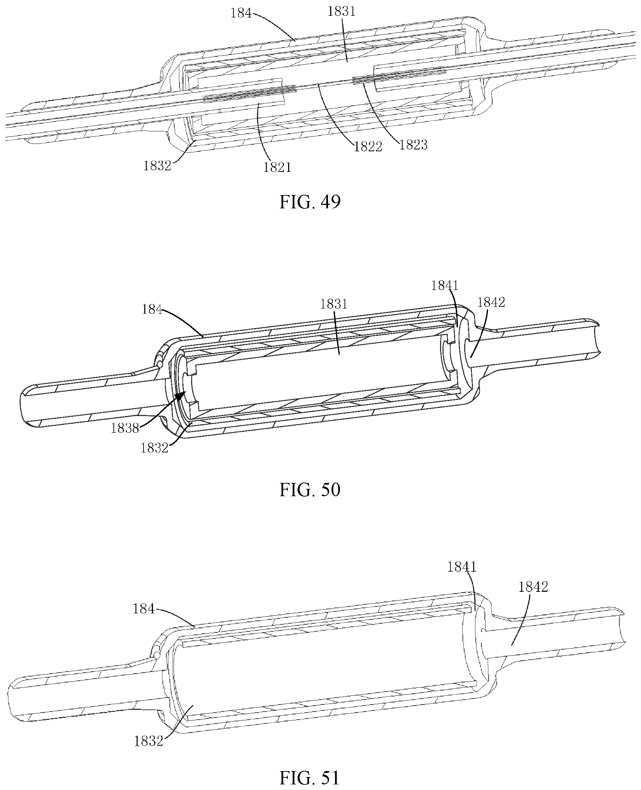

FIG. 47 is a structural diagram of another isolation member according to an embodiment of the present disclosure. FIG. 48 is an exploded view of another isolation member according to an embodiment of the present disclosure. FIG. 49 is a cross-sectional view of another isolation member and an optical cable body according to an embodiment of the present disclosure. As shown in FIG. 47, FIG. 48, and FIG. 49, in some embodiments, the isolation member 183 may include an isolation sleeve 1831. The isolation sleeve 1831 can be formed therein with a second cavity. The optical cable body can be disposed in the second cavity. The seal can be disposed in the second cavity. The seal can fill a gap between the optical cable body and the isolation sleeve 1831 to prevent the coolant from seeping from one end of the optical cable body 182 to the other end of the optical cable body 182.

In some embodiments, the isolation sleeve 1831 can be provided with a first through hole 1837. The optical cable body 182 can be passed through the first through hole 1837 to enter the isolation member 183 from outside of the isolation member 183.

The optical cable body in the second cavity may be a second optical cable body or a third optical cable body. When the optical cable body 182 is a third optical cable body, reinforcement threads in the second cavity are broken. In some embodiments, the length of the broken reinforcement threads in the second cavity is 3-5 mm, thereby ensuring that the tensile strength of the isolation member 183 meets the requirements.

In some embodiments, the isolation sleeve 1831 may include a first isolation portion.

In some embodiments, the isolation sleeve 1831 may include a second isolation portion. The first isolation portion and the second isolation portion may have the same shape.

The first isolation portion and the second isolation portion are connected to form the isolation sleeve 1831 having the second cavity. The sealing adhesive is dispensed at the bottom of the first isolation portion, and the cut optical cable body is mounted inside the first isolation portion and coated with a layer of sealing adhesive to completely seal two ends of the cut optical cable body; the second isolation portion is covered, and masking tape is used to fix the first isolation portion and the second isolation portion; and the fixed first isolation portion and second isolation portion are dried at a high temperature of 100°C for more than 1 hour, and the seal is formed after the sealing adhesive is cured.

As shown in FIG. 47, FIG. 48, and FIG. 49, in some embodiments, the isolation member 183 may include a first protective tube 1832. The first protective tube 1832 can be covered on the isolation sleeve 1831 to ensure the strength of the isolation sleeve 1831 and prevent the isolation sleeve 1831 from being broken at a connection between the first isolation portion and the second isolation portion to the greatest extent.

In some embodiments, the first protective tube 1832 can be made of metal or plastic with high hardness, such that the first protective tube 1832 serves as a rigid protective tube, thereby better preventing breakage of the isolation sleeve 1831 at a connection between the first isolation portion and the second isolation portion, and better protecting the isolation sleeve 1831.

In some embodiments, one end of the first protective tube 1832 can be provided with a second through hole 1838. The second through hole 1838 can be arranged corresponding to the first through hole 1837 to allow passage of the optical cable body 182, such that the optical cable body 182 is passed through the first through hole 1837 and the second through hole 1838.

In some embodiments, the first protective tube 1832 can be formed therein with a third cavity. The isolation sleeve 1831 can be disposed in the third cavity. The eleventh seal can be disposed in the third cavity. The eleventh seal can be located between the isolation sleeve 1831 and the first protective tube 1832, and at two ends of the first protective tube 1832 to fill gaps between the optical cable body 182, the isolation sleeve 1831, and the first protective tube 1832, thereby achieving a fixed connection between the isolation sleeve 1831 and the first protective tube 1832, and a sealed connection between the first protective tube 1832 and the optical cable body 182, and preventing seepage of the coolant.

In some embodiments, the limit step can be disposed in the third cavity inside the first protective tube 1832. The limit step is configured to limit a position of the isolation sleeve 1831 in the first protective tube 1832. For example, one end of the third cavity inside the first protective tube 1832 is provided with a limit step, and the isolation sleeve 1831 is located between the other end of the third cavity and the limit step to limit a position of the isolation sleeve 1831 in the first protective tube 1832. For example, two ends of the third cavity inside the first protective tube 1832 are each provided with a limit step, and the isolation sleeve 1831 is located between the two limit steps to limit a position of the isolation sleeve 1831 in the first protective tube 1832.

As shown in FIG. 47, FIG. 48, and FIG. 49, in some embodiments, the isolation member 183 may include a second protective tube 184. The second protective tube 184 can be covered on the first protective tube 1832 and the optical cable body 182 located outside the first protective tube 1832 to protect the optical cable body 182.

In some embodiments, the second protective tube 184 is made of plastic with low hardness, such that the second protective tube 184 serves as a flexible protective tube.

The second protective tube 184 has a heat-shrinkable property, that is, the second protective tube 184 shrinks upon heating. For example, the second protective tube 184 is a heat-shrinkable tube.

After the second protective tube 184 is sleeved on the first protective tube 1832 and the optical cable body 182, the connection between the first protective tube 1832 and the optical cable body 182 located outside the first protective tube 1832 is heated. After heating, the size of a region covered on the first protective tube 1832 is greater than the size of a region covered on the optical cable body 182, such that the second protective tube 184 can be tightly connected to the first protective tube 1832 and the optical cable body 182 located outside the first protective tube 1832, thereby improving the stability of a connection between the isolation member 183 and the optical cable body 182.

In some embodiments, the size of the region covered on the first protective tube 1832 can be greater than or equal to the size of the first protective tube 1832, such that the second protective tube 184 can accommodate the first protective tube 1832, thereby enabling a tight connection between the second protective tube 184 and the first protective tube 1832.

In some embodiments, the size of the region covered on the optical cable body 182 can be greater than or equal to the size of the optical cable body 182 located outside the first protective tube 1832, such that the second protective tube 184 can accommodate the optical cable body 182 located outside the first protective tube 1832, thereby enabling a tight connection between the second protective tube 184 and the optical cable body 182 located outside the first protective tube 1832.

After the sealing adhesive in the isolation sleeve 1831 is cured to form a seal, the isolation sleeve 1831 is coated with the sealing adhesive and inserted into the first protective tube 1832. The sealing adhesive is added to the two ends of the first protective tube 1832 for sealing, and then dried at a high temperature of 100°C for more than 1 hour. A seal is formed after the sealing adhesive is cured. After the sealing adhesive in the first protective tube 1832 is cured to form the seal, the first protective tube 1832 is coated with the sealing adhesive and inserted into the second protective tube 184.

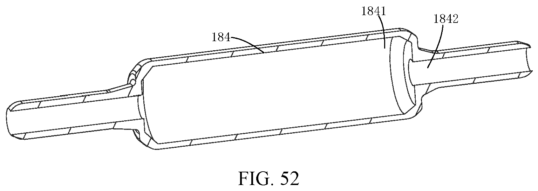

FIG. 50 is a cross-sectional view of another isolation member according to an embodiment of the present disclosure. FIG. 51 is a cross-sectional view of a first protective tube and a second protective tube according to an embodiment of the present disclosure. FIG. 52 is a cross-sectional view of a second protective tube according to an embodiment of the present disclosure. As shown in FIG. 50, FIG. 51, and FIG. 52, in some embodiments, the second protective tube 184 may include a first region. An inner cavity of the first region may be a fourth cavity 1841. The first protective tube 1832 can be placed in the fourth cavity 1841, such that the second protective tube 184 can be covered on the first protective tube 1832, thereby protecting the optical cable body.

In some embodiments, the second protective tube 184 may include a second region. The second region can be connected to the first region. An inner cavity of the second regions may be a fourth through hole 1842. The optical cable body 182 can be disposed in the fourth through hole 1842. The fourth through hole 1842 can be arranged corresponding to the first through hole 1837 and the second through hole 1838 to allow passage of the optical cable body 182, such that the optical cable body 182 is passed through the first through hole 1837 and the fourth through hole 1842.

The first region can be located between two second regions. One end of the first region can be connected to one second region, and the other end of the first region can be connected to the other second region. The radius of the second region is smaller than the radius of the first region.

In some embodiments, a connection between the first region and the second region can be inclined with respect to the first region.

In some embodiments, the connection between the first region and the second region can be inclined with respect to the second region.

The connection between the first region and the second region is inclined with respect to both the first region and the second region, such that the stress received by the optical cable body 182 is reduced, thereby protecting the optical cable body 182.

An inclination angle between the connection between the first region and the second region and the first region is not equal to 90°. An inclination angle between the connection between the first region and the second region and the second region is not equal to 90°.

In some embodiments, the optical module carries an optical cable. The optical cable is provided with an optical cable fixation member at a connection with the optical module. An isolation member is disposed in the middle of the optical cable. The optical cable includes an optical cable body. The optical cable body includes a cable sheath, reinforcement threads, and an optical fiber, where the optical fiber and the reinforcements are both placed in the cable sheath. The optical cable fixation member includes an engaging part, a first crimping ring, and a protective sleeve. A first end of the engaging part is engaged with the optical module, and a second end of the engaging part is arranged adjacent to the cable sheath. The engaging part is formed therein with a first cavity, in which the optical fiber and the seventh seal are disposed. The seventh seal fills the gap between the engaging part and the optical fiber to reduce seepage of the coolant from inside of the optical module into the optical cable body outside the optical module. The engaging part includes a limit protrusion located at the first end of the engaging part. A first end of the first crimping ring is crimped on the second end of the engaging part, and a second end of the first crimping ring is crimped on the cable sheath. Reinforcement threads are disposed between the first crimping ring and the engaging part. The reinforcement threads extend beyond the first crimping ring to ensure that the tensile strength of the optical cable meets the requirements. The reinforcement threads extending beyond the first crimping ring are located in a region between the limit protrusion and the first crimping ring. The region between the limit protrusion and the first crimping ring is a containing groove, in which the eighth seal is further disposed. The height of the eighth seal is greater than the height of the reinforcement threads, such that the reinforcement threads are inside the eighth seal, thereby reducing seepage of the coolant from outside the optical module into the optical cable body outside the optical module. The protective sleeve is covered on the cable sheath, the first crimping ring, and the eighth seal to protect the optical cable body. The isolation member includes an isolation sleeve, a first protective tube, and a second protective tube. The isolation sleeve is formed therein with a second cavity, in which the optical cable body and the tenth seal are disposed. The tenth seal wraps the broken surface of the broken cable sheath and the outer wall of the unbroken optical fiber to prevent the coolant from seeping from one end of the optical cable body to the other end of the optical cable body. The first protective tube is covered on the isolation sleeve to protect the isolation sleeve. The second protective tube is covered on the first protective tube and the optical cable body located outside the first protective tube to protect the optical cable body. In some embodiments, the seventh seal and the optical fiber are disposed in the first cavity, and the seventh seal fills the gap between the engaging part and the optical fiber to reduce seepage of the coolant from inside of the optical module into the optical cable body outside the optical module; the eighth seal and the reinforcement threads are disposed in the containing groove, and the reinforcement threads are inside the eighth seal to reduce seepage of the coolant from outside the optical module into the optical cable body outside the optical module; the optical cable body and the tenth seal are disposed in the second cavity, and the tenth seal wraps the optical cable body to prevent the coolant from seeping from one end of the optical cable body to the other end of the optical cable body; and the second protective tube protects the optical cable body.

Finally, it should be noted that the above embodiments are provided merely to illustrate the technical solutions of the present application and not to limit them. Although the present application has been described in detail with reference to the aforementioned embodiments, those of ordinary skill in the art should understand that they can still make modifications on the technical solutions described in the aforementioned embodiments or make equivalent replacements on some of the technical features; and these modifications or replacements do not make the essence of the corresponding technical solutions depart from the spirit and scope of the technical solutions of the various embodiments of the present application.

## Claims

1. An optical module, comprising:
a circuit board, wherein an optical chip is disposed on the circuit board;
a lens assembly that is covered on the optical chip, wherein a first seal exists between the lens assembly and the circuit board, the first seal being located on an outer side wall of the lens assembly and a surface of the circuit board; one end of the lens assembly is disposed with a wrapping cavity; the lens assembly is further disposed thereon with a recessed optical port groove and a blocking assembly, at least part of the blocking assembly covering on the optical port groove to prevent coolant from penetrating into the optical port groove, and the optical port groove having a reflective surface configured to reflect an optical signal;
an optical fiber holder, wherein one end of the optical fiber holder fixedly connects an optical fiber, the other end of the optical fiber holder is fixed within the wrapping cavity, and a first end face of the optical fiber holder is embedded within the wrapping cavity; a second seal exists between the optical fiber holder and the wrapping cavity, the second seal being located between respective side faces of the optical fiber holder and outer side faces of three side walls of the wrapping cavity away from the circuit board, and around one side wall of the wrapping cavity close to the circuit board;
wherein the optical module carries an optical cable, wherein the optical cable is provided, at a part of the optical cable that is connected with the optical module, with an optical cable fixation member, and is provided, at a middle part of the optical cable, with an isolation member; the optical cable has an optical cable body, the optical cable body comprising a cable sheath and an optical fiber placed in the cable sheath;
wherein the cable fixation member comprises an engaging part, the engaging part being provided therein with a first cavity, and a first end of the engaging part engaging at an optical port of the optical module; the optical fiber and a seventh seal filling a gap between the engaging part and the optical fiber are arranged in the first cavity;
the isolation member comprises an isolation sleeve, the isolation sleeve being provided therein with a second cavity, in which the cable sheath having a broken surface, the optical fiber that is not broke and a tenth seal wrapping the broken surface of the broken cable sheath and an outer wall of the unbroken optical fiber are arranged.

2. The optical module according to claim 1, wherein a top surface of the wrapping cavity is flush with a top surface of the lens assembly;
the optical port groove is provided, at one end of a groove wall of the optical port groove, with an adhesive-blocking protrusion, and, at the other end of the groove wall, with the reflective surface, the adhesive-blocking protrusion being configured to narrow the optical port groove and support a seal in the optical port groove so as to reduce seepage of the seal in the optical port groove onto the reflective surface.

3. The optical module according to claim 2, wherein the optical port groove comprises a first optical port groove and a second optical port groove separated from each other, wherein an emission adhesive-blocking protrusion is disposed in the first optical port groove, a reception adhesive-blocking protrusion is disposed in the second optical port groove, and the emission adhesive-blocking protrusion and the reception adhesive-blocking protrusion are not communicated to each other.

4. The optical module according to claim 2, wherein the adhesive-blocking protrusion comprises a first adhesive-blocking protrusion, a groove wall where the first adhesive-blocking protrusion is located protrudes outward to form a second adhesive-blocking protrusion; the second adhesive-blocking protrusion and the reflective surface are located at two ends of the groove wall where the first adhesive-blocking protrusion is located, respectively; and the second adhesive-blocking protrusion, the first adhesive-blocking protrusion and an opening of the optical port groove form multi-level steps.

5. The optical module according to claim 4, wherein the first adhesive-blocking protrusion comprises a plurality of closed ring-shaped protrusions of different sizes, and the plurality of closed ring-shaped protrusions are arranged from smallest to largest based on their sizes to form multi-level steps;
the second adhesive-blocking protrusion comprises a plurality of non-closed ring-shaped protrusions of different sizes, and the plurality of non-closed ring-shaped protrusions are arranged from smallest to largest based on their sizes to form multi-level steps.

6. The optical module according to claim 1, wherein the blocking assembly comprises a blocking sheet, and wherein a top and an outer side wall of the blocking sheet are arranged with a third seal;
the optical port groove is provided thereon with a placement groove, in which the blocking sheet and the third seal are arranged, the third seal being located on the top and outer side wall of the blocking sheet, and the placement groove is configured to limit a position of the third seal.

7. The optical module according to claim 6, wherein the blocking sheet and the third seal are arranged in the placement groove, and the third seal is located on the top and the outer side wall of the blocking sheet.

8. The optical module according to claim 6, wherein the placement groove comprises a first placement groove, and a second placement groove, which is recessed inward, is arranged within the first placement groove; the blocking sheet is arranged in the second placement groove, and the second placement groove is configured to limit a position of the blocking sheet; the third seal is arranged in both the first placement groove and the second placement groove such that the third seal is located on the top and the outer side wall of the blocking sheet.

9. The optical module according to claim 1, wherein a side wall of the wrapping cavity away from the circuit board is integrally formed with the lens assembly.

10. The optical module according to claim 1, wherein a side wall of the wrapping cavity away from the circuit board and the lens assembly are separate structural components, the side wall of the wrapping cavity away from the circuit board is formed as a sealing cover plate, and wherein a portion of the sealing cover plate is configured as the blocking assembly, one end of the sealing cover plate is covered on an opening of the optical port groove, and another end of the sealing cover plate is covered on the optical fiber holder.

11. The optical module according to claim 10, wherein the first end face of the optical fiber holder is located at a bottom side of the sealing cover plate, a fifth seal exists between the sealing cover plate and the lens assembly and the optical fiber holder, the fifth seal being located on an outer side wall of the sealing cover plate and on the lens assembly and the optical fiber holder, such that the sealing cover plate is sealed and connected with the lens assembly and the optical fiber holder.

12. The optical module according to claim 10, wherein a top surface of the optical fiber holder is located higher than a top surface of the lens assembly; a lower surface of the sealing cover plate is provided with an inwardly recessed covering groove, respective faces of the covering groove being connected to corresponding side faces of the optical fiber holder, and wherein the top surface of the optical fiber holder is a side face of the optical fiber holder away from the circuit board.

13. The optical module according to claim 12, wherein a height difference between the top surface of the optical fiber holder and the top surface of the lens assembly is greater than or equal to a width of the covering groove.

14. The optical module according to claim 12, wherein the covering groove comprises a top wall, a first side wall, a second side wall and a third side wall, and wherein the first side wall, the second side wall and the third side wall are respectively connected to the top wall; the top wall is connected to the side face of the optical fiber holder away from the circuit board; the first side wall and the third side wall are respectively connected to side faces of the optical fiber holder; and the second side wall is connected to the first end face of the optical fiber holder.

15. The optical module according to claim 12, wherein the sealing cover plate is a steel plate sealing cover plate, and an upper surface of the sealing cover plate is provided with a covering protrusion, the covering protrusion being arranged corresponding to the covering groove.

16. The optical module according to claim 10, wherein the lens assembly further comprises a first vent hole on the sealing cover plate.

17. The optical module according to claim 1, wherein a side of the lens assembly facing the circuit board is disposed with a cover cavity, and the lens assembly further comprises vent holes;
the vent holes comprise a first vent hole located above the wrapping cavity and a second vent hole located above the cover cavity;
the vent hole comprises the first vent hole located above the wrapping cavity, and an air passage located below the wrapping cavity to communicate the wrapping cavity with the cover cavity;
the vent hole comprises the second vent hole located above the cover cavity, and the air passage located below the wrapping cavity to communicate the wrapping cavity with the cover cavity.

18. The optical module according to claim 17, wherein the first vent hole is arranged on a top surface of the optical fiber holder between the second seal and the wrapping cavity so as to allow air in the wrapping cavity to be released; a twelfth seal is arranged in the first vent hole to seal the first vent hole to prevent coolant from seeping into the first vent hole; and wherein the top surface of the optical fiber holder is a side face of the optical fiber holder farthest from the circuit board.

19. The optical module according to claim 1, wherein the reflective surface comprises an emission reflective surface and a reception reflective surface arranged in different angles.

20. The optical module according to claim 1, wherein the wrapping cavity comprises a first wrapping sidewall, an engaging wall, a second wrapping sidewall, a third wrapping sidewall and a fourth wrapping sidewall, and wherein the engaging wall is arranged corresponding to the first end face of the optical fiber holder and opposite to an opening of the wrapping cavity; the first wrapping sidewall is arranged corresponding to a top surface of the optical fiber holder and opposite to the fourth wrapping sidewall; the second and third wrapping sidewalls are oppositely arranged; the first and fourth wrapping sidewalls are respectively connected to the engaging wall, the second wrapping sidewall and the third wrapping sidewall; and the second and third wrapping sidewalls are also connected to the engaging wall.

21. The optical module according to claim 20, wherein a length of the fourth wrapping sidewall is greater than or equal to a length of a side face of the optical fiber holder that is arranged corresponding to the fourth wrapping sidewall.

22. The optical module according to claim 1, further comprising a sealing dam having a first end fixedly connected to the circuit board and a second end fixedly connected to the lens assembly; and the blocking assembly is a blocking sheet;
the sealing dam, the circuit board and the lens assembly form a containing cavity, in which the blocking sheet, the optical fiber holder and a sixth seal are arranged, the sixth seal surrounding the blocking sheet and the optical fiber holder to seal gaps between the optical fiber holder and the lens assembly, and between the blocking sheet and the lens assembly.

23. The optical module according to claim 22, wherein the sealing dam has a second locating column, avoidance holes and a first engaging interface;
the second locating column is located on a bottom of a first end of the sealing dam, is fixedly arranged in a correspondingly arranged second locating hole on the circuit board to secure the first end of the sealing dam to the circuit board;
the avoidance holes are located on the bottom of the first end of the sealing dam between two second locating columns, and are configured to make way for the optical fiber;
the first engaging interface is located on a bottom of a second end of the sealing dam and is engaged to the lens assembly, and wherein the first engaging interface has an engaging surface on one end of the first engaging interface corresponding to the first seal at an end of the lens assembly; and a second engaging interface is inwardly recessed in the first engaging interface and is engaged to an upper surface and the outer side wall of the lens assembly.

24. The optical module according to claim 23, wherein an inclination angle of the engaging surface is same as an inclination angle of the first seal at the end of the lens assembly such that the engaging surface is sealed with the first seal at the end of the lens assembly.

25. The optical module according to claim 23, wherein a number of the avoidance holes is greater than or equal to a number of optical fibers in the optical fiber holder; and each avoidance hole is disposed therein with a fourteenth seal to seal gaps between the avoidance hole and corresponding optical fiber, preventing the sixth seal in the containing cavity from escaping through the avoidance hole.

26. The optical module according to claim 22, wherein a top surface of the sealing dam is located at a height greater than or equal to that of a top surface of the optical fiber holder; the top surface of the optical fiber holder is located at a height greater than or equal to that of a top surface of the blocking assembly on the lens assembly, and a top surface of the sixth seal is located at a height greater than that of the top surface of the optical fiber holder.

27. The optical module according to claim 1, wherein
the optical cable fixation member further comprises:
a crimping ring, one end of the crimping ring is crimped on an outer side of the engaging part, and the other end of the crimping ring is crimped on the cable sheath;
a protective sleeve that is covered on the crimping ring; and
the isolation member further comprises:
a protective tube that is covered on the isolation sleeve to protect the isolation sleeve.

28. The optical module according to claim 27, wherein the optical cable body further comprises reinforcement threads, the reinforcement threads are placed in the cable sheath and also exist between the crimping ring and the engaging part.

29. The optical module according to claim 28, wherein an outer wall of the engaging part is provided with a limit protrusion at a first end of the engaging part;
the crimping ring comprises a first crimping ring crimped on a second end of the engaging part, the area between the limit protrusion and the first crimping ring forming a placement groove, in which an eighth seal and reinforcement threads extended from the first crimping ring are arranged, the reinforcement threads existing in the eighth seal.

30. The optical module according to claim 29, wherein the protective tube comprises a first protective tube covering the isolation sleeve, and a second protective tube covering the first protective tube and the optical cable body outside the first protective tube to protect the optical cable body.

31. The optical module according to claim 29, wherein the optical cable body further comprises broken reinforcement threads wrapped by the cable sheath, broken portions of the reinforcement threads being located in the second cavity; one end of the first crimping ring crimps on the reinforcement threads outside of the engaging part, and ends of the reinforcement threads extend beyond the first crimping ring.

32. The optical module according to claim 30, wherein the second protective tube has a heat-shrinkable property.

33. The optical module according to claim 30, wherein the second protective tube comprises a first region and second regions, and wherein the first region is located between two second regions, and the first protective tube is arranged in the first region; the optical cable body is arranged in the second regions, and the first region has a radius larger than that of the second region.

34. The optical module according to claim 30, wherein the engaging part further comprises an engaging part body and a stop protrusion; the limit protrusion is located between the stop protrusion and the engaging part body; a height of the limit protrusion is greater than that of the engaging part body, is greater than that of the first crimping ring, and is greater than that of the eighth seal.

35. The optical module according to claim 30, wherein the first protective sleeve is formed therein with a third cavity, and the isolation sleeve and an eleventh seal are arranged in the third cavity, the eleventh seal being located between the isolation sleeve and the first protective sleeve, at two ends of the first protective sleeve.

36. The optical module according to claim 30, wherein the isolation sleeve has a first through hole, the first protective sleeve has a second through hole, the second protective sleeve has a third through hole; the first through hole, the second through hole and the third through hole are correspondingly arranged to allow the optical cable body outside the isolation member to pass through the third through hole, the second through hole and the first through hole, and then into the isolation member;
the isolation sleeve comprises a first isolation portion and a second isolation portion that are configured to be combined to form the isolation sleeve having the second cavity and the first through hole.

37. The optical module according to claim 30, wherein the limit protrusion, an outer side of the engaging part body and the first crimping ring enclose the placement groove of a U shape.

38. The optical cable according to claim 28, wherein the isolation sleeve has a first through hole, both ends of the protective sleeve are provided with second through holes, the second through holes communicating with the first through hole to allow the optical cable body to pass through the first through hole and the second through holes.

39. The optical cable according to claim 38, wherein the optical cable body further comprises a broken reinforcement thread, the reinforcement thread is wrapped by the cable sheath, and broken portions of the reinforcement thread are located within the second cavity;
the crimping ring comprises a second crimping ring, one end of the second crimping ring crimps on the reinforcement thread outside the engaging part; an end of the reinforcement thread extend beyond the second crimping ring; and the tenth seal wraps broken surfaces of the broken cable sheath.

40. The optical cable according to claim 39, wherein the protective sleeve is disposed therein with a third cavity; the isolation sleeve and an eleventh seal are arranged in the third cavity, and the eleventh seal is located between the isolation sleeve and the protective sleeve, at both ends of the protective sleeve.

41. The optical cable according to claim 40, wherein the isolation sleeve comprises a first inner plug and a second inner plug of the same shape, the first inner plug and the second inner plug are connected to form the second cavity and two first through holes.

42. The optical cable according to claim 41, wherein optical fiber inside the optical module and optical fiber outside the optical module belong to the same optical fiber.

43. The optical module according to claim 28, wherein the crimping ring comprises a first crimping ring and a second crimping ring;
the first crimping ring is covered on the engaging part, the reinforcement threads also exist between the first crimping ring and the engaging part, such that the reinforcement threads are crimped on the engaging part; a preset distance exists between ends of the reinforcement threads and a left end of the first crimping ring, to reduce seepage of coolant outside of the optical module into optical fiber inside the optical cable body along the reinforcement threads;
the second crimping ring is crimped, at one end, to a right end of the first crimping ring, is crimped, at a middle portion, to the reinforcement threads on the surface of the engaging part, and is crimped, at another end, on the cable sheath; and the second crimping ring is configured to tightly clamp the optical cable fixation member with the reinforcement threads to ensure tensile of the optical cable;
the protective sleeve is covered on the first crimping ring, the second crimping ring and the cable sheath.

44. The optical cable according to claim 43, wherein an eighth seal is arranged on an outer side of the first crimping ring, a height of the eighth seal does not exceed a height of the second crimping ring, to allow the protective sleeve to be at a fixed position of the engaging part, wherein the eighth seal is located on the outer side of the first crimping ring, at a gap between the first crimping ring and the engaging part, and at a connection between the first crimping ring and the second crimping ring.

45. The optical cable according to claim 43, wherein a ninth seal is arranged between the second crimping ring and the optical cable body, the ninth seal being configured to seal a gap between the optical cable body and the second crimping ring, such that the optical cable body is sealed and connected with the second crimping ring.

46. The optical cable according to claim 43, wherein the engaging part comprises an engaging part body and a stop protrusion; the first crimping ring is covered on an outer side of the engaging part body, and is located before the stop protrusion.

47. The optical module according to claim 28, wherein a tenth seal is arranged in the cable sheath, the tenth seal is wrapped on an inner wall of the cable sheath, the tenth seal is wrapped on the optical fiber and the reinforcement threads, to prevent coolant from seeping from one end of the optical cable body to the other end of the optical cable body.

48. The optical cable according to claim 47, wherein the optical cable body comprises a cut optical cable body, the cut optical cable body comprises a broken cable sheath, an unbroken reinforcement thread and an unbroken optical fiber; the tenth seal is wrapped on an inner wall of the broken cable sheath, an outer wall of the broken cable sheath, broken surfaces of the broken cable sheath, an outer wall of the unbroken optical fiber and an outer wall of the unbroken reinforcement thread, to prevent coolant from seeping from one end of the optical cable body to the other end of the optical cable body.

49. The optical cable according to claim 47, wherein the optical cable body comprises a cut optical cable body, the cut optical cable body comprises a broken cable sheath, a broken reinforcement thread and an unbroken optical fiber; the tenth seal is wrapped on an inner wall of the broken cable sheath, an outer wall of the broken cable sheath, broken surfaces of the broken cable sheath, an outer wall of the broken reinforcement thread, broken surfaces of the broken reinforcement thread and an outer wall of the unbroken optical fiber, to prevent coolant from seeping from one end of the optical cable body to the other end of the optical cable body.

50. The optical cable according to any one of claims 43-49, wherein the isolation member further comprises:
a protective tail tube that is covered on both ends of the protective sleeve to protect the optical cable body.

51. The optical cable according to claim 50, wherein an outer side of the protective tube is disposed with a limit protrusion that is connected with one end of the protective tail sleeve to limit a position of the protective tail sleeve; an inner side of the protective tube is arranged with a third cavity, in which the isolation sleeve and an eleventh seal are arranged, the eleventh seal being located between the isolation sleeve and the protective tube to fill gaps between the optical cable body, the isolation sleeve and the protective tube.

52. The optical cable according to claim 51, wherein the protective tail sleeve comprises a protective end and an engaging end, the protective end wrapping around the optical cable body, the engaging end covering on both ends of the protective tube and stopped at the limit protrusion; the engaging end being arranged at a preset inclination angle to protect the optical cable body.

53. The optical cable according to any one of claims 43-49, wherein a length of the reinforcement thread within the second cavity is 3~5 mm.

54. The optical cable according to claim 49, wherein the isolation member further comprises a heat-shrinkable sleeve covered on the isolation sleeve to ensure stability of the isolation sleeve.
